# EUROPEAN PATENT APPLICATION

(11) **EP 4 694 517 A1**
(43) Date of publication of application: **11.02.2026**
(21) Application number: 23929052.1
(22) Date of filing: 24.03.2023
(51) Int. Cl.: H04W 74/00

(54) **CHANNEL ACCESS METHOD AND APPARATUS AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Penza, Giancarlo
(86) International application number: PCT/CN2023/083650
(87) International publication number: WO 2024/197448

(57) **Abstract**

Embodiments of the present application provide a channel access method and apparatus and a communication device. The method comprises: a first device sends a first frame, the first frame comprising a first field, and the first field being used for indicating a channel occupancy time of a first channel; the first field is used for a second device to set or update a network allocation vector (NAV), and the NAV is used for the second device to determine a busy time of the first channel; all or part of the channel occupancy time is used for a first type of devices or a third device to perform communication on the first channel, and the third device belongs to the first type devices.

## Description

### TECHNICAL FIELD

Embodiments of the present disclosure relate to the technical field of wireless communications, and particularly to a method and apparatus for channel access, and a communication device.

### BACKGROUND

The use of unlicensed spectrum is an important deployment scenario in cellular communication systems. In the case of using the unlicensed spectrum, in order to ensure fairness of channel usage, a communication device is required to perform channel access (or channel contention) before occupying the channel for data transmission. However, some types of communication devices do not support the channel access mechanism, and thus cannot implement the channel access autonomously. How such types of communication devices can occupy the channel for communication is a problem that needs to be solved.

### SUMMARY

The embodiments of the present disclosure provide a method and an apparatus for channel access, a communication device, a chip, a computer-readable storage medium, a computer program product, and a computer program.

A method for channel access is provided in an embodiment of the present disclosure, and the method includes the following operation.

A first device transmits a first frame, where the first frame includes a first field, the first field is used to indicate a channel occupation time of a first channel; the first field is used for a second device to set or update a network allocation vector (NAV), the NAV is used for the second device to determine a busy time of the first channel; all or part of the channel occupation time is used for a first-type device or a third device to communicate on the first channel, and the third device belongs to the first-type device.

A method for channel access is provided in an embodiment of the present disclosure, and the method includes the following operation.

A first device determines a channel access parameter related to a first-type device or a third device, and performs the channel access on a first channel based on the channel access parameter, to obtain a channel occupation time of the first channel; where all or part of the channel occupation time is used for the first-type device or the third device to communicate on the first channel, and the third device belongs to the first-type device.

A method for channel access is provided in an embodiment of the present disclosure, and the method includes the following operation.

A first device transmits a first signal, where the first signal is used to determine a channel reservation time for a first-type device or a third device; the channel reservation time is used for the first-type device or the third device to communicate on a first channel, and the third device belongs to the first-type device.

A method for channel access is provided in an embodiment of the present disclosure, and the method includes the following operation.

A third device receives a first signal from a first device, where the first signal is used to determine a channel reservation time for the first-type device or the third device; the channel reservation time is used for the first-type device or the third device to communicate on a first channel, and the third device belongs to the first-type device.

An apparatus for channel access is provided in an embodiment of the present disclosure, the apparatus is applied to a first device, and the apparatus includes a transmission unit.

The transmission unit is configured to transmit a first frame, where the first frame includes a first field, the first field is used to indicate a channel occupation time of a first channel; the first field is used for a second device to set or update a network allocation vector (NAV), the NAV is used for the second device to determine a busy time of the first channel; all or part of the channel occupation time is used for a first-type device or a third device to communicate on the first channel, and the third device belongs to the first-type device.

An apparatus for channel access is provided in an embodiment of the present disclosure, the apparatus is applied to a first device, and the apparatus includes a determination unit and an access unit.

The determination unit is configured to determine a channel access parameter related to a first-type device or a third device, where the third device belongs to the first-type device.

The access unit is configured to perform the channel access on a first channel based on the channel access parameter, to obtain a channel occupation time of the first channel; where all or part of the channel occupation time is used for the first-type device or the third device to communicate on the first channel, and the third device belongs to the first-type device.

An apparatus for channel access is provided in an embodiment of the present disclosure, the apparatus is applied to a first device, and the apparatus includes a transmission unit.

The transmission unit is configured to transmit a first signal, where the first signal is used to determine a channel reservation time for the first-type device or the third device; the channel reservation time is used for the first-type device or the third device to communicate on a first channel, and the third device belongs to the first-type device.

An apparatus for channel access is provided in an embodiment of the present disclosure, the apparatus is applied to a third device, and the apparatus includes a receiving unit.

The receiving unit is configured to receive a first signal from a first device, where the first signal is used to determine a channel reservation time for the first-type device or the third device; the channel reservation time is used for the first-type device or the third device to communicate on the first channel, and the third device belongs to the first-type device

A communication device is provided in an embodiment of the present disclosure, and the communication device includes a processor and a memory. The memory is configured to store a computer program, and the processor is configured to call and run the computer program in the memory to perform each of the aforementioned methods for channel access.

A chip is provided in an embodiment of the present disclosure, and the chip is configured to perform each of the aforementioned methods for channel access.

Specifically, the chip includes a processor, and the processor is configured to call and run a computer program stored in a memory, to cause a device mounted with the chip to perform each of the aforementioned methods for channel access.

A computer-readable storage medium is provided in an embodiment of the present disclosure, and the computer-readable storage medium has stored thereon a computer program. The computer program causes a computer to perform each of the aforementioned methods for channel access.

A computer program product is provided in an embodiment of the present disclosure, and the computer program product includes computer program instructions. The computer program instructions cause a computer to perform each of the aforementioned methods for channel access.

A computer program is provided in an embodiment of the present disclosure. The computer program, when executed by a computer, causes the computer to perform each of the aforementioned methods for channel access.

According to the technical schemes of the embodiments of the present disclosure, in one aspect, the first device can determine the channel access parameter related to the first-type device or the third device, and perform the channel access on the first channel based on the channel access parameter, to obtain the channel occupation time of the first channel. As such, by performing the channel access for the first-type device or the third device, the first device can share all or part of the obtained channel occupation time with the first-type device or the third device, to enable the first-type device or the third device, even if not supporting the channel access mechanism, to communicate on the first channel by using the all or part of the channel occupation time obtained by the first device. Since the channel access parameter can reflect the priority of the channel access, the first device can perform the channel access based on the channel access parameter related to the first-type device or the third device, which can be understood as that the first device can perform the channel access with a specific priority for the first-type device or the third device, and can further satisfy the communication requirements of the first-type device or the third device. In another aspect, the first device can announce the channel occupation time of the first channel through the first field included in the first frame. As such, the second device can set or update, based on the first field, the NAV of the second device, to determine the busy time of the first channel and further delay the access to the first channel accordingly. Moreover, the second device can reserve all or part of the channel occupation time of the first channel to the first-type device or the third device, to enable the first-type device or the third device, even if not supporting the channel access mechanism, to communicate on the first channel with all or part of the channel occupation time obtained by the first device. In yet another aspect, the first device can notify, through the first signal, the third device of the channel reservation time for the first-type device or the third device, to enable the third device, even if not supporting the channel access mechanism, to communicate on the first channel by using the channel reservation time obtained by the first device.

### BRIEF DESCRIPTION OF THE DRAWINGS

The accompanying drawings illustrated herein are used to provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a diagram of a communication system architecture in which an embodiment of the present disclosure is applied.
FIG. 2 is a diagram of another communication system architecture in which an embodiment of the present disclosure is applied.
FIG. 3 is a schematic structural diagram of a physical layer protocol data unit (PPDU).
FIG. 4 is a schematic structural diagram of a media access control (MAC) frame.
FIG. 5 is a timing sequence diagram of an operation mechanism of carrier sense multiple access with collision avoidance (CSMA/CA).
FIG. 6 is a schematic flowchart of a method for channel access according to an embodiment of the present disclosure.
FIG. 7-1 is a timing sequence diagram of transmission of a beacon frame by an access point (AP) according to an embodiment of the present disclosure.
FIG. 7-2 is a first schematic diagram of channel occupation by an AP according to an embodiment of the present disclosure.
FIG. 7-3 is a second schematic diagram of channel occupation by an AP according to an embodiment of the present disclosure.
FIG. 8-1 is a schematic structural diagram of a PPDU header of an null data PPDU carrying Medium Access Control (NDP CMAC) PPDU frame according to an embodiment of the present disclosure.
FIG. 8-2 is a schematic structural diagram of a SIGNAL field according to an embodiment of the present disclosure.
FIG. 9-1 is a schematic diagram of channel occupation through a beacon frame according to an embodiment of the present disclosure.
FIG. 9-2 is a basic flowchart of a request to send/clear to send (RTS/CTS) protocol according to an embodiment of the present disclosure.
FIG. 9-3 is a schematic diagram of channel occupation through an RTS frame according to an embodiment of the present disclosure.
FIG. 10 is a schematic diagram of a format of a first signal according to an embodiment of the present disclosure.
FIG. 11 is a first schematic diagram of a structural composition of an apparatus for channel access according to an embodiment of the present disclosure.
FIG. 12 is a second schematic diagram of a structural composition of an apparatus for channel access according to an embodiment of the present disclosure.
FIG. 13 is a third schematic diagram of a structural composition of an apparatus for channel access according to an embodiment of the present disclosure.
FIG. 14 is a fourth schematic diagram of a structural composition of an apparatus for channel access according to an embodiment of the present disclosure.
FIG. 15 is a schematic structural diagram of a communication device according to an embodiment of the present disclosure.
FIG. 16 is a schematic structural diagram of a chip according to an embodiment of the present disclosure.

### DETAILED DESCRIPTION

The technical schemes in the embodiments of the present disclosure may be applied to various communication systems, such as wireless fidelity (WiFi) systems, cellular systems, etc.

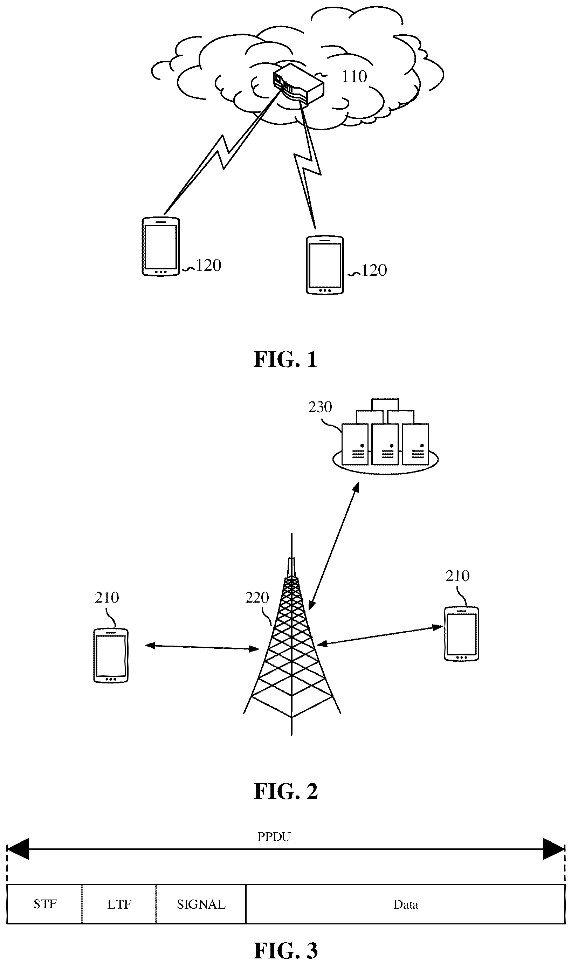

FIG. 1 is an example of a communication system architecture in which an embodiment of the present disclosure is applied.

As illustrated in FIG. 1, the communication system may include an access point (AP) 110 and a station (STA) 120 that accesses a network through the AP 110. In some scenarios, the AP 110 may be referred to as an AP STA, i.e., the AP 110 may also an STA in a sense. In some scenarios, the STA 120 may be referred to as a non-AP STA. In some scenarios, the STA 120 may include an AP STA and a non-AP STA. Communication in the communication system may include: communication between the AP 110 and the STA 120, communication between the STA 120 and another STA 120, or communication between the STA 120 and a peer STA. Here, the peer STA may refer to a device that communicates with a peer of the STA 120, for example, the peer STA may be an AP or a non-AP STA.

Herein, the AP 110 may serve as a bridge connecting a wired network and a wireless network, with a primary function of connecting various wireless network clients together, and then accessing the wireless network into the Ethernet. The AP 110 may be a terminal device (such as a mobile phone) or a network device (such as a router) with a WiFi chip.

It should be noted that the role of the STA 120 in the communication system may not be absolute. That is, the role of the STA 120 in the communication system may be switched between the AP and the STA. For example, in some scenarios, when a mobile phone is connected to a router, the mobile phone acts as the STA; and when the mobile phone serves as a hotspot for another mobile phone, the mobile phone acts as the AP.

In some implementations, the AP 110 and the STA 120 may be devices applied in an internet of vehicles (IoT) node, an IoT sensor and the like in the IoT, a smart camera, a smart remote control, a smart water/electricity meter and the like in smart home, as well as a sensor and the like in smart city.

In some implementations, the AP 110 may be a device that supports the 802.11be standard. The AP may also be a device that supports various current and future WLAN standards from the 802.11 family, such as 802.11ax, 802.11ac, 802.11n, 802.11g, 802.11b and 802.11a. In some implementations, the STA 120 may support the 802.11be standard. The STA may also support various current and future WLAN standards from the 802.11 family, such as 802.11ax, 802.11ac, 802.11n, 802.11g, 802.11b and 802.11a.

In some implementations, the AP 110 and/or the STA 120 may be deployed on land, including indoor or outdoor, handheld, wearable or vehicle-mounted. The AP 110 and/or the STA 120 may also be deployed on the water (such as ships). Moreover, the AP 110 and/or the STA 120 may also be deployed in the air (e.g., on an aircraft, balloon and satellite, etc.).

In some implementations, the STA 120 may be a device that supports the WLAN/WiFi technology, such as a mobile phone, a Pad, a computer with a wireless transceiving function, a virtual reality (VR) device, or an augmented reality (AR) device, a wireless device or a set-top box in industrial control, a wireless device or a vehicle-mounted communication device in self driving, a wireless device in remote medical, a wireless device in smart grid, a wireless device in transportation safety, a wireless device in smart city, a wireless device in smart home, a vehicle-mounted communication device, a wireless communication chip/an application specific integrated circuit (ASIC)/a system on chip (SoC), and the like.

Exemplarily, the STA 120 may also be a wearable device. The wearable device referred to as a wearable smart device, which is a generic term of the wearable devices that are intelligently designed and developed by applying wearable technologies to daily wear, such as glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. Generalized wearable smart devices have full functions and large size, and may realize complete or partial functions without relying on smart phones, such as smart watches or smart glasses, as well as those that only focus on a certain type of application function and need to be used in conjunction with other devices (e.g., smart phones), such as various smart bracelets and smart jewelry for physical sign monitoring.

It is to be understood that FIG. 1 is only an example of the present disclosure, and should not be construed as any limitation of the present disclosure. For example, FIG. 1 illustrates only one AP and two STAs exemplarily. In some implementations, the communication system may include multiple APs as well as another number of STAs, which are not limited in the embodiments of the present disclosure.

FIG. 2 is an example of another communication system architecture in which an embodiment of the present disclosure is applied.

As illustrated in FIG. 2, the communication system may include a terminal device 210 and a network device 220. The network device 220 may communicate with the terminal device 210 through an air interface. Multi-service transmission between the terminal device 210 and the network device 220 is supported.

It should be understood that the technical schemes of the embodiments of the present disclosure may be applied to various communication systems, such as an Internet of things (IoT) system, a narrow band Internet of things (NB-IoT) system, an enhanced machine-type communications (eMTC) system, a 5-th generation (5G) communication system (also referred to as a new radio (NR) communication system), or a future communication system, etc.

In the communication system illustrated in FIG. 1, the network device 220 may be an access network device that communicates with the terminal device 210. The access network device may provide communication coverage for a specific geographic region and may communicate with a terminal device 210 (e.g., a User Equipment (UE)) in the coverage.

The network device 220 may be a next generation radio access network (NG RAN) device, a base station (gNB) in an NR system, or a wireless controller in a cloud radio access network (CRAN). The network device 220 may further be a relay station, an access point, a vehicle-mounted device, a wearable device, a hub, a switch, a network bridge, a router, a network device in a future evolved public land mobile network (PLMN) or the like.

The terminal device 210 may be any terminal device, which includes, but not limited to, a terminal device that has a wired or wireless connection to the network device 220 or other terminal devices.

As an example, the terminal device 210 may be an access terminal, a UE, a user unit, a user station, a mobile station, a mobile platform, a remote station, a remote terminal, a mobile device, a user terminal, a terminal, a wireless communication device, a user agent, or user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 210 may be applied to device to device (D2D) communication.

The wireless communication system may further include a core network device 230 that communicates with the base station. The core network device 230 may be a 5G core (5GC) device, such as an access and mobility management function (AMF), an authentication server function (AUSF), a user plane function (UPF), or a session management function (SMF). Optionally, the core network device 130 may also be an evolved packet core (EPC) device in an LTE network, for example, a session management function + core packet gateway (SMF+PGW-C) device. It should be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

One base station, one core network device and two terminal devices are exemplarily shown in FIG. 2. Optionally, the wireless communication system may include multiple base stations, and another number of terminal devices may be included in the coverage of each base station, which is not limited in the embodiments of the present disclosure.

It should be noted that FIGS. 1 and 2 only illustrate the system to which the present disclosure is applicable by way of example. Of course, the methods illustrated in the embodiments of the present disclosure may also be applicable to other systems. Moreover, the terms "system" and "network" the present disclosure are usually interchangeably used herein. The term "and/or" herein only is used to indicate an association relationship for describing the associated objects, and represents that there are three kinds of relationships. For example, "A and/or B" may represent three conditions, i.e., independent existence of A, existence of both A and B, and independent existence of B. In addition, the character "/" herein usually represents that the previous and next associated objects form an "or" relationship. It should also be understood that the term "indicate" referred to in the embodiments of the present disclosure may be a direct indication or an indirect indication, and may also be indicative of an associated relationship. For example, "A indicates B", which may mean that A directly indicates B, e.g., B may be obtained through A. It may further mean that A indirectly indicates B, e.g., A indicates C, and B may be obtained through C. It may further mean that there is an association between A and B. It should also be understood that the term "corresponding" referred to in the embodiments of the present disclosure may represent that there is a direct correspondence or an indirect correspondence between the two objects, or may further represent that there is an association relationship between the two objects, a relationship between the indication and the object to be indicated, or a relationship between the configuration and the object to be configured, etc. It should also be understood that the phrase "predefined" or "predefined rules" referred to in the embodiments of the present disclosure may be implemented by prestoring corresponding codes, tables, or by other means that may be used to indicate relevant information in devices (such as terminal devices and network devices). The specific implementations of which are not limited in the present disclosure. For example, the "predefined" may refer to what is defined in a protocol. It should also be understood that the "protocol" in the embodiments of the present disclosure may be a standard protocol in the communication field, such as an LTE protocol, an NR protocol, and related protocols applied in future communication systems, which is not limited in the present disclosure.

In order to facilitate the understanding of the technical schemes in the embodiments of the present disclosure, related technologies of the embodiments of the present disclosure are elaborated below. The following related technologies used as optional schemes may be combined with technical schemes of the embodiments of the present disclosure in various ways, all of which belong to the scope of protection of the embodiments of the present disclosure.

### Types of zero-power terminals

Based on energy sources and usage modes of the zero-power terminals, the zero-power terminals may be classified into the following types.

### (1) Passive zero-power terminal

Such type of zero-power terminal does not require a built-in battery. When the zero-power terminal approaches the network device, the zero-power terminal is in a near-field range formed by antenna radiation of the network device. Therefore, an induced current is generated by the antenna of the zero-power terminal through the electromagnetic induction, and the induced current drives a low-power chip circuit of the zero-power terminal to operate, thereby realizing demodulation of a forward link signal and modulation of a backward link signal, etc. For the back scattering link, the implementation of back scattering is utilized by the zero-power terminal for the signal transmission.

Accordingly, whether for the forward link or the reverse link, no built-in battery is required to drive the passive zero-power terminal, making the passive zero-power terminal to be a true zero-power terminal.

Since the passive zero-power terminal does not require the battery, a radio-frequency circuit and a baseband circuit of the passive zero-power terminal are very simple. For example, a low noise amplifier (LNA), a power amplifier (PA), a crystal oscillator, an analog-to-digital converter (ADC) and the like are not required, so that the passive zero-power terminal has many advantages, such as a small size, a light weight, a low price and a long service life.

### (2) Semi-passive zero-power terminal

The semi-passive zero-power terminal is not equipped with a conventional battery, but it may use a power harvesting module to harvest the radio wave energy and further store the harvested energy in an energy storage unit (such as a capacitor). After obtaining the energy, the energy storage unit may drive the low-power computing module (i.e., the low-power chip circuit) of the zero-power terminal to operate, thereby realizing the demodulation of the forward link signal and the modulation of the backward link signal, etc. For the back scattering link, the implementation of back scattering is utilized by the zero-power terminal for the signal transmission.

Accordingly, whether for the forward link or the reverse link, no built-in battery is required to drive the semi-passive zero-power terminal. Although the energy stored in the capacitor is used during the operation of the semi-passive zero-power terminal, the energy is sourced from the energy of the radio waves harvested by the power harvesting module, making the semi-passive zero-power terminal to be a true zero-power terminal.

The semi-passive zero-power terminal inherits many advantages of the passive zero-power terminal, so that the semi-passive zero-power terminal has many advantages, such as a small size, a light weight, a low price and a long service life.

### (3) Active zero-power terminal

In some scenarios, the zero-power terminal that is used may also be the active zero-power terminal, which may include a built-in battery. The battery is used to drive the low-power computing module (i.e., the low-power chip circuit) of the zero-power terminal to operate, thereby realizing the demodulation of the forward link signal and the modulation of the backward link signal, etc. However, for the back scattering link, the implementation of back scattering is utilized by the zero-power terminal for the signal transmission. Therefore, the zero-power consumption of such type of terminal is mainly reflected in the fact that the signal transmission of the reverse link does not require the power of the terminal but uses the back scattering manner.

The active zero-power terminal supplies the power to the radio-frequency chip through the built-in battery, thereby increasing a communication range and improving communication reliability. As such, the active zero-power terminal may be applied in some scenarios that require a relatively high requirement in terms of the communication range and communication delay.

### Cellular Passive Internet of Things (IoT)

With the increasing number of industry applications, the types and application scenarios of connected objects are also growing, which raises higher demands for the price and power consumption of communication devices. It is a key technology of the cellular IoT to implement applications of battery-free and low-cost passive IoT devices, these devices enrich the types and quantities of the terminals connected to the network, thereby truly realizing the Internet of everything. Herein, the passive IoT device may be implemented based on the zero-power terminal, and may also be extended on such basis, to be suitable for the cellular IoT.

### Ambient energy-based device

In NR and WiFi systems, the battery-free and low-cost characteristics of devices support, for example, low-cost, large-scale deployment and maintenance-free operation for the IoT devices. Current standardization efforts are focused on supporting an ambient energy-based IoT device in the NR and WiFi systems, which is also referred to as an ambient IoT (AMP IoT) device. The energy required for the operation of such device is sourced from ambient energy harvesting, and the source of the ambient energy may be a wireless signal, solar energy, thermal energy, etc. Such device may be similar to the passive zero-power terminal or semi-passive zero-power terminal in the zero-power communication.

### PPDU in WiFi system

In the WiFi systems, information is transmitted based on a physical layer protocol data unit (PPDU) frame. As shown in FIG. 3, a PPDU frame includes a PPDU header and a data portion. Herein, the PPDU header includes the following three fields: a short training field (STF), a long training field (LTF) and a signal (SIGNAL). The STF is mainly composed of 10 short symbols (denoted as t1-t10), each symbol is 0.8 us, and such short symbols are mainly used for implementing frame synchronization and coarse frequency synchronization. Herein, the t1-t7 may be mainly used to implement a signal detect function, an automatic gain control (AGC) function, and a diversity selection function, and the t8-t10 may be mainly used to implement a coarse frequency synchronization (coarse freq) function, an offset estimation function, and a timing synchronize function. The LTF mainly implements fine frequency synchronization and channel estimation. The SIGNAL carries information related to the data portion, including data transmission rate, length information of data packet, reserved bit(s) and tail bit(s).

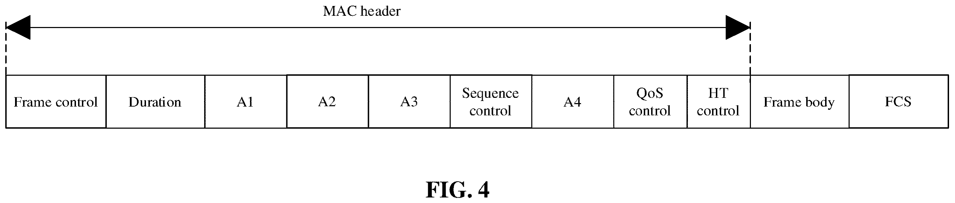

The data portion of the PPDU frame carries a MAC frame. As shown in FIG. 4, the frame structure of the MAC frame includes the following: a MAC header, a frame body, and a frame check sequence (FCS). The MAC header includes the following fields: a frame control field, a Duration field, an address 1 (A1) field, an address 2 (A2) field, an address 3 (A3) field, a sequence control field, an address 4 (A4) field, a quality of service (QoS) control field, a high-throughtput control (HT control) field, a frame body field, and an FCS. It should be noted that different MAC frames may include different fields, and not all of the fields listed above appear in the MAC frame. For the Duration field, it occupies 2 bytes (that is, 16 bits) and is used to indicate the channel occupation time (i.e., how long the current transmission will occupy the channel). When the fifteenth bit of such field is set to 0, the field is used to set or update the network allocation amount (NAV). The value of the NAV represents how many microseconds of the channel (or medium) will be used for the current transmission.

### Unlicensed spectrum

The unlicensed spectrum is the spectrum divided by countries and regions that can be used for the communications of radio devices. The spectrum is generally considered to be a shared spectrum, i.e., communication devices in different communication systems can use the spectrum as long as they meet the regulatory requirements set by the country or region on the spectrum, and there is no need to apply for a proprietary spectrum authorization from the government. In order to enable the friendly coexistence of various communication systems using the unlicensed spectrum for wireless communications on such spectrum, some countries or regions have stipulated the regulatory requirements that must be met to use the unlicensed spectrum. For example, in Europe, the communication devices follow a principle of "listen-before-talk (LBT)". That is, before transmitting a signal on a channel in the unlicensed spectrum, the communication devices is required to perform the channel sensing. The communication devices can transmit the signal, only when the channel sensing result indicates that the channel is idle; and if the channel sensing result of the communication device on the channel in the unlicensed spectrum indicates that the channel is busy, the communication device cannot transmit the signal. Moreover, in order to ensure the fairness, in one transmission, the duration for the signal transmission by the communication device using the channel in the unlicensed spectrum cannot exceed the maximum channel occupation Time (MCOT).

Currently, technologies for using the unlicensed spectrum have been standardized in cellular communication systems, such as the usage of the unlicensed spectrum below 7 GHz. In subsequent technology evolution, the usage of the unlicensed spectrum in higher frequency bands will be considered, such as the unlicensed spectrum in 52.6 GHz-71 GHz. The widely used WiFi technology is also a communication technology that uses the unlicensed spectrum.

### Channel access mechanism

In the 802.11 protocol, the basic channel access protocol is a distributed coordination function (DCF), which can allow different compatible STAs to share the used channel through the carrier sense multiple access with collision avoidance (CSMA/CA) mechanism, to reduce the probability of collision. The DCF mainly includes the following four core mechanisms.

### (1) Carrier sense mechanism

The carrier sense mechanism is divided into a physical carrier sense and a virtual carrier sense. If any sensing result indicates the channel is busy, then the channel is busy.

The physical carrier sense mechanism adopts three channel idle detection methods, including energy detection, carrier detection, and hybrid energy-carrier detection, which are collectively referred to as clear channel assessment (CCA). In the energy detection, the energy magnitude of the received signal is determined, and when the power of the received signal is greater than a threshold of ED_threshold specified by the physical layer, it is considered that the channel is occupied. In the carrier detection, the preamble portion of the signal in the channel is detected, and it is further determined whether the channel is occupied based on the detection result.

The virtual carrier sense mechanism is provided by the MAC layer, and the NAV is used in the 802.11 standard to implement the virtual carrier sense. Specifically, the STA that occupies the channel may announce how long the channel is still needed to be occupied by the STA through the Duration field in the MAC frame, where the Duration field is used to indicate the channel occupation time (which may also be referred to as "duration"). Additionally, the STA that does not occupy the channel may set or update the NAV of the STA based on the Duration field in the received MAC frame. The NAV is a timer that is used to define the duration for which the current channel is to remain occupied; and the NAV counts down to 0 upon expiration. Only when the value of NAV is 0 and the physical carrier sense indicates that the channel is idle, the current channel can be considered to be idle.

### (2) Interframe space (IFS) mechanism

In order to avoid collisions as much as possible, the 802.11 specifies that all STAs (including AP STAs and non-AP STAs), after completing the transmission of the frame, have to wait for a short period of time (continuing to monitor) before transmitting the next frame. The generic term for the period of time is the interframe space. The length of the interframe space depends on the type of frame to be transmitted by the STA. High-priority frames are required to wait for a shorter period of time, and therefore the high-priority frames can get priority to be transmitted, but low-priority frames are required to wait for a longer period of time. If a low-priority frame has not been transmitted in time and another high-priority frame has been transmitted to the channel, the channel becomes a busy state, so the low-priority frame can only be delayed. As such, the chance of collision can be reduced.

The length of the interframe space is divided based on the priority of channel access. The shorter the interframe space, the higher the corresponding priority. The length of the interframe space is listed from small to large as follows.
1. Short interframe space (SIFS): SIFS is the shortest interframe space and is used to separate frames that require immediate response, such as control frames (RTS/CTS/ACK), etc. The SIFS is used between two transmissions in a frame switching sequence, which can prevent another STA that is waiting for the channel from attempting to use the channel.
2. Point coordination function interframe space (PIFS): it can only be used by STAs operating in point coordination function (PCF) mode.
3. Distributed coordination function interframe space (DIFS): it can only be used by STAs operating in the DCF mode.
4. Extended interframe space (EIFS): in case of an error in the previous frame, the transmitting node has to delay the EIFS instead of the DIFS before transmitting the next frame.

### (3) Random backoff mechanism

In the 802.11, the binary exponential backoff method is used to solve the backoff time when the node fails to send or when a collision occurs. The node selects a random number in the contention window (CW) as the reference random backoff counter value. After the random backoff counter value is selected, it is equivalent to setting a backoff timer, that is, the initial value of the backoff timer is the selected random backoff counter value. When the random backoff counter value starts to count down, the countdown process is as follows. The node performs the channel sensing every time a slot time passes; if the channel is idle, the value of the backoff timer is counted down by one in units of the slot time; if the channel is busy, the backoff timer freezes its remaining time; upon the channel becoming idle again and after waiting for another DIFS, resumes the counting down from the frozen remaining time. When the value of the backoff timer is reduced to zero, the node can access the channel to transmit information on the channel. The value of CW is a value between the minimum CW (CWmin) and the maximum CW (CWmax) of the physical characteristic value, and is used to define the range in which the node selects the random backoff counter value.

### (4) RTS/CTS handshake mechanism

The request to send/clear to send (RTS/CTS) protocol is a mechanism adopted by the 802.11 to reduce the collisions caused by hidden node problems. The basic idea of the RTS/CTS mechanism is to reserve the channel through short control packets. If the transmitting station wants to transmit a message to the receiving station, the transmitting station must firstly send an RTS frame. After the RTS frame is received by a station around the transmitting station, the station may set or update, based on the Duration field in the frame, the NAV of the station. After receiving the RTS frame, the receiving station may reply with a CTS frame. Since the stations whose NAV value is not 0 cannot contend for the channel, the collision of transmission between the transmitting station and the receiving station can be avoided.

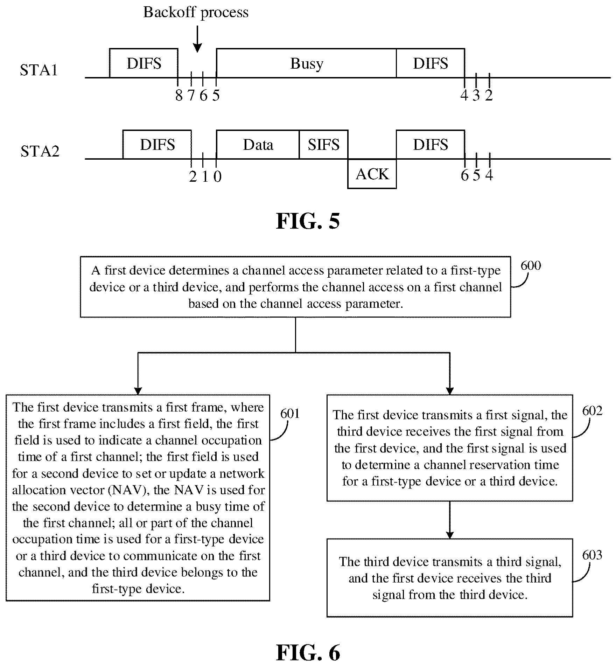

In order to facilitate the understanding of the operation mechanism of CSMA/CA, the following is an example of the operation mechanism of CSMA/CA through the timing sequence diagram shown in FIG. 5. As shown in FIG. 5, the operation mechanism of CSMA/CA can roughly include the following processes.
1. When STA1 and STA2 both have pending data to be transmitted and are required to contend for the channel for the data transmission, the STA1 and the STA2 firstly need to wait for a DIFS period; and if the channel remains idle during the DIFS time, then the backoff process can be performed.
2. When STA1 and STA2 enter the backoff process, the STA1 and the STA2 firstly need to select a random number from the CW as the reference random backoff counter value. In the 802.11 protocol, the default initial CW is 31, i.e., the range of the random backoff counter value is [0, 31]. In FIG. 5, the STA1 selects 8 as the random backoff counter value, and the STA2 selects 2 as the random backoff counter value.
3. During the backoff process, the node monitors the channel every time a slot time passes; and if the channel is idle, the value of the corresponding backoff timer is decreased by one. As shown in FIG. 5, after passing 3 slot times, the backoff timer of the STA1 is decremented from 8 to 5, and the backoff timer of the STA2 is decremented from 2 to 0.
4. When the backoff timer of the node counts down to 0, the node contends to obtain the channel, so that the data can be transmitted. As shown in FIG. 5, the backoff timer of the STA2 counts down to 0, and the STA2 firstly obtains athe channel to transmit the data to the AP. After receiving the data, the AP may use the CRC mechanism to verify the data; and if the verification passes, the AP may feedback an acknowledgement (ACK) frame after passing the SIFS time.
5. When the STA2 successfully transmits the data and also successfully receives the ACK frame corresponding to the data after passing the SIFS time, the current transmission is completed.
6. When the current transmission is completed, the node needs to wait for the DIFS time again to restart the backoff process. If the node has just finished the data transmission, then at the beginning of the backoff process, it is necessary to select a random number from the CW again as the random backoff counter value. If the node does not transmit the data, the backoff timer continues counting down directly from the previous countdown result. As shown in FIG. 5, if the STA1 does not contend for the channel, during the second backoff process, the backoff timer of the STA1 directly counts down to 4 based on the previous 5.

Herein, the usage of the unlicensed spectrum is an important deployment scenario in cellular communication systems. In the case of using the unlicensed spectrum, some types of communication devices (such as zero-power devices) do not support the aforementioned complex channel access mechanism, and thus, such types of communication devices cannot implement the channel access autonomously. How such types of communication devices can occupy the channel for communication and reduce the collision and interference is a problem that needs to be solved. Therefore, the following technical aspects of the present embodiment have been proposed.

Here, for the communication device such as a type of a zero-power device, there is a requirement for low complexity due to its power consumption constrains. For example, the receiver only supports simple modulation and demodulation methods, such as only supporting amplitude shift keying (ASK) and frequency shift keying (FSK), but not supporting orthogonal Frequency Division multiplexing (OFDM). For the usage of the unlicensed spectrum, in order to ensure the fairness of the channel usage, if such type of communication device is required to occupy the channel for data transmission, such type of communication device is also required to perform the corresponding channel contention. As such, such type of communication device is required to support the CSMA/CA mechanism, to be compatible and coexist with the existing device(s). This requires such type of communication device to be able to detect a PPDU frame transmitted based on the OFDM for both of the physical carrier sense and the virtual carrier sense, as well as the support of RTS/CTS mechanism. However, it is not possible to be achieved for such type of communication device and thus cannot implement the channel access autonomously. Therefore, the technical schemes of the embodiments of the present disclosure propose a method for channel access.

For convenience of understanding the technical schemes of the embodiments of the present disclosure, the technical schemes in the present disclosure are described below through the detailed embodiments. The above related technologies, used as optional schemes, may be combined with the technical schemes of the embodiments of the present disclosure in various ways, and the combinations shall fall within the scope of the protection of the embodiments of the present disclosure. The embodiments of the present disclosure include at least part of the following contents.

In the embodiments of the present disclosure, the first device is a device that supports a channel access mechanism. In some implementations, the first device is a non-zero-power device. In a WiFi system, the first device may be an AP or an STA. In a cellular system, the first device may be a base station or a UE. In a zero-power communication system, the first device may be a power supply device or a control node.

In the embodiments of the present disclosure, the second device is a device different from the first device, and the second device may be a device that supports the channel access mechanism. In some implementations, the second device is a non-zero-power device. In a WiFi system, the second device may be an STA or an AP. In a cellular system, the second device may be a UE or a base station.

In the embodiments of the present disclosure, the first-type device generally refers to a device that does not support the channel access mechanism, for example, a device of the zero-power device type. The third device refers to a specific device of the first-type devices, such as a specific zero-power device. From the perspective of power supply mode, the type of zero-power devices may include ambient energy-based devices (such as AMP IoT devices), battery-free terminals, maintenance-free terminals, etc. The zero-power device may be used as a communication terminal in the WiFi system or the cellular system network.

It should be noted that, in the embodiments of the present disclosure, the described "channel occupation" may also be described as "media occupancy", and the described "channel idle" may also be described as "media idle", and the described "channel busy" may also be described as "media busy".

FIG. 6 is a first schematic flowchart of a method for channel access according to an embodiment of the present disclosure. As illustrated in FIG. 6, the method for channel access includes the following operation 601.

At block 601, a first device transmits a first frame, where the first frame includes a first field, the first field is used to indicate a channel occupation time of a first channel; the first field is used for a second device to set or update a network allocation vector (NAV), the NAV is used for the second device to determine a busy time of the first channel; all or part of the channel occupation time is used for a first-type device or a third device to communicate on the first channel, and the third device belongs to the first-type device.

In an embodiment of the present disclosure, the first device may be a device that obtains the channel access for transmission of the first-type device or the third device. The first device may perform the channel access in a conventional manner, for example, in accordance with the CSMA/CA mechanism specified in the 802.11 protocol, and the CSMA/CA mechanism may refer to the aforementioned related description.

In some implementations, prior to the operation 601, the method may further include the following operation 600.

At block 600, the first device determines a channel access parameter related to the first-type device or the third device, and performs the channel access on the first channel based on the channel access parameter.

In some implementations, the channel access parameter may include at least one of the following:
a first parameter, used to indicate a size of a contention window (CW); or
a second parameter, used to indicate a size or type of an interframe space corresponding to a waiting time.

Here, the size of the contention window can reflect the priority of the channel access, and the smaller the contention window, the higher the priority of the channel access. The size or type of the interframe space can reflect the priority of the channel access, and the smaller the interframe space, the higher the priority of the channel access.

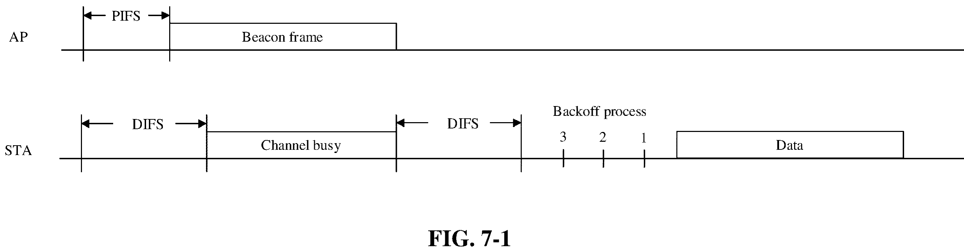

Taking a beacon frame in the WiFi system as an example, in order to ensure that the AP transmits the beacon frame in a higher channel access priority, during the transmission process of the beacon frame, the protocol defines a waiting time of the AP as PIFS (corresponding to the second parameter), and sets CW = 0 (corresponding to the first parameter), to ensure that the channel access priority of the AP is higher than that of other devices when transmitting the beacon frame. As shown in FIG. 7-1, the waiting time PIFS of the AP before transmitting the beacon frame is shorter than a waiting time DIFS of the STA. If the channel is idle during the PIFS, the AP firstly enters a backoff process after an end of the PIFS, and further selects, within the range of [0, CW], a random number as a reference random backoff counter value. Since CW = 0, the selected random backoff counter value is 0, and the AP can proceed with the transmission of the beacon frame immediately.

It can be seen that the size of CW and the length of waiting time can reflect the channel access priority. In an embodiment of the present disclosure, the channel access parameter(s) related to the first-type device or the third device may be set, to enable the first device to perform the channel access with a specific priority for the first-type device or the third device, thereby, the communication requirements of the first-type device or the third device can be satisfied.

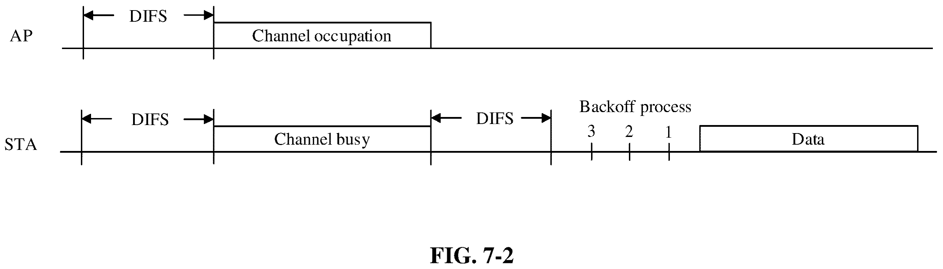

In one example, the first device may be an AP, and when the AP obtains the channel access for the transmission of the first-type device or the third device, the channel access parameter(s) (e.g., the waiting time, the CW) related to the first-type device or the third device may be set to ensure a certain channel access priority. As shown in FIG. 7-2, the AP, in order to perform the channel access, can adopt the waiting time of a DIFS with the CW = 0. The AP may wait for the DIFS, if the channel is idle during the DIFS, the AP may enter the backoff process after an end of DIFS, and further select, within in a range of [0, CW], a random number as a reference random backoff counter value. Since CW = 0, the selected random backoff counter value is 0, and the AP can perform the channel occupation immediately.

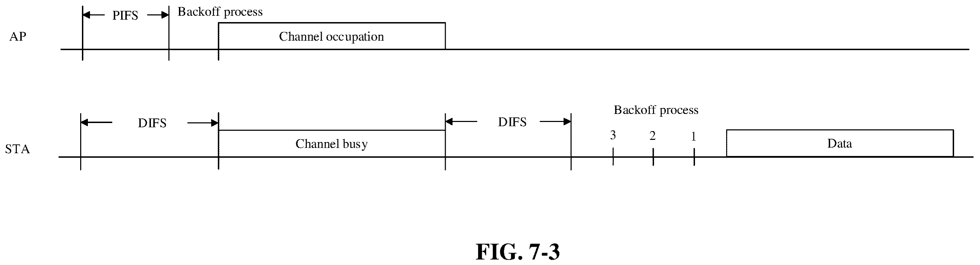

In one example, the first device may be an AP, and when the AP obtains the channel access for the transmission of the first-type device or the third device, the channel access parameter(s) (e.g., the waiting time, the CW) related to the first-type device or the third device may be set to ensure a certain channel access priority. As shown in FIG. 7-3, the AP, in order to perform the channel access, can adopt the waiting time of a PIFS with the CW = 1. The AP may wait for the PIFS, and if the channel is idle during the PIFS, the AP may enter the backoff process after an end of PIFS, and further select, within a range of [0, CW], a random number as a reference random backoff counter value. Since CW = 1, the range of the selected random backoff counter value may be in [0, 1]. Assuming that the selected random backoff counter value is 1, the AP may monitor the channel during a slot time following the PIFS; and if the channel is idle, the random backoff counter value may be decreased by 1. When the random backoff counter value is 0, the AP can occupy the channel.

In the above technical schemes, the time corresponding to the channel being occupied by the first device is referred to as a channel occupation time. For the second device, the channel occupation time obtained by the first device can be regarded as a channel busy time. Taking FIGS. 7-2 and 7-3 as examples, the second device is a STA, and the STA regards the channel occupation time obtained by the first device as the channel busy time, and the STA does not occupy the channel during such time period.

In some implementations, the channel access parameter related to the first-type device or the third device may be determined based on at least one of following of the first-type device or the third device: a device type, a device group, a type of transmitted data, a type of a transmitted PPDU frame, a channel access time, a target wake time, or a restricted access time. Herein, the channel access time may be determined based on the target wake time and/or the restricted access time. Herein, the restricted access time may be a restricted access window (RAW) of the first-type device or the third device or a RAW slot allocated to the first-type device or the third device within the RAW.

Specifically, the channel access parameter used by the first device to perform the channel access may be related to the device type of zero-power devices. For example, for the type of zero-power devices with a higher priority of data transmission, the channel access parameter used by the first device to perform the channel access can ensure a higher channel access priority. The zero-power device with the higher priority of data transmission may be a sensor device for danger detection, or the zero-power device with higher real-time requirements of data transmission, etc. Conversely, for the type of zero-power devices with a lower priority of data transmission, the channel access parameter used by the first device to perform the channel access may not be required to guarantee a higher channel access priority, and such channel access parameter may be the same as the channel access parameter used by the second device to perform the channel access. The type of the zero-power devices may be identified by a device type ID.

Specifically, the channel access parameter used by the first device to perform the channel access may be related to a group of zero-power devices. Different channel access parameters may be used for the channel access corresponding to the first device for different groups of zero-power devices. The group of zero-power devices may be identified by a device group ID.

Specifically, the channel access parameter used by the first device to perform the channel access may be related to a type of data transmitted by the zero-power device. For different data types, different channel access parameters may be correspondingly used for the first device to perform the channel access. Different data types may have different QoS levels. The data type may be identified by a data type ID.

Specifically, the channel access parameter used by the first device to perform the channel access may be related to a type of PPDU frame transmitted by the zero-power device. For different PPDU frame types, different channel access parameters may be correspondingly used for the first device to perform the channel access. Herein, the type of the PPDU frame may include a management frame, a control frame, a data frame, and the like. For example, the control frame may have a higher channel access priority, and the data frame may have a lower channel access priority. For different frame types, the first device may respectively use different channel access parameters, to implement different channel access priorities. Herein, the type of the PPDU frame may be identified by a frame type ID.

Specifically, the channel access parameter used by the first device to perform the channel access may be related to a channel access time of the zero-power device, a target wake time of the zero-power device, and a restricted access time of the zero-power device. Herein, the channel access time of the zero-power device may also be related to the target wake time and/or the restricted access time of the zero-power device.

Hereinafter, the target wake time and the restricted access time will be described.

For the purpose of saving power of the device, a target wake time (TWT) is introduced in the 802.11ah, and the AP and STA will agree on a periodic TWT. When the TWT arrives, the STA may wake up to receive a trigger frame transmitted by the AP and further perform a data switching. When the current transmission is completed, the STA may return to a sleep state.

In order to reduce the channel access collision, a restricted access window (RAW) is introduced in the 802.11ah, and only a part of STAs may be allowed to access each RAW. Each RAW may be divided into one or more RAW slots, and the STA may perform the channel access in the allocated RAW slot and may not perform the channel access in other RAW slots, thereby reducing the channel access collision.

The transmission of the zero-power device may be configured within a time window, which may be, for example, a TWT cycle or RAW. Upon the arrival of the TWT or RAW, the zero-power device may perform the channel access to ensure that the channel is available during the TWT or RAW corresponding to the zero-power device; that is, the channel access time of the zero-power device may be related to the TWT or RAW. For different times, the first device may adopt different channel access parameters. Specifically, the first device may adopt different channel access parameters for different channel access times. The first device may adopt employ different channel access parameters for different TWTs, TWT types or TWT cycles. The first device may adopt different channel access parameters for different RAWs or RAW cycles. Herein, the TWT type may be, for example, an individual TWT, a broadcast TWT, an opportunistic PS, etc. For each of such three types of TWTs, the first device may adopt different channel access parameters upon the arrival of the TWT, respectively. Since the first device may adopt different channel access parameters at different times, the opportunity or probability for the zero-power device to obtain the channel preempted by the first device for transmission may be different at different times.

It should be noted that the "zero-power device" mentioned in the above schemes may generally refer to the first-type device or may refer to a specific third device.

In an embodiment of the present disclosure, after performing the channel access for transmission of the first-type device or the third device to obtain the channel occupation time, the first device transmits a first frame, the first frame includes a first field, and the first field is used to indicate a channel occupation time of a first channel. The first field is further used for a second device to set or update a network allocation vector (NAV), the NAV is used for the second device to determine a busy time of the first channel; all or part of the channel occupation time is used for a first-type device or a third device to communicate on the first channel, and the third device belongs to the first-type device.

Here, the "channel occupation time" may also be described as the "duration".

Here, the second device may monitor any possible frame. Taking the second device to monitor the first frame from the first device as an example, the second device may set or update, based on the first field in the first frame, the NAV of the second device. The NAV may be a timer, which is used to define how long the current channel needs to be occupied, and the NAV may count down to 0 upon expiration. The current channel may be considered to be idle only when the value of NAV is 0 and the physical carrier sense indicates that the channel is idle. It can be seen that the time corresponding to the NAV counting down to 0 belongs to the channel busy time.

In an embodiment of the present disclosure, the first frame is a PPDU frame, the first field is a Duration field (or a Duration/ID field), and the Duration field is used to indicate a channel occupation time (which may also be referred to as a "duration"). Here, the channel occupation time may refer to the duration for which the first device continues to occupy the channel after the transmission of the first frame, and the units of the Duration field may be microseconds.

Several frame structures of the PPDU frame including the first field are described below.

In some implementations, the PPDU frame may include a PPDU header, and the PPDU header may include the first field. Specifically, the PPDU header may include a short training field, a long training field and a signal field, and the signal field may include the first field.

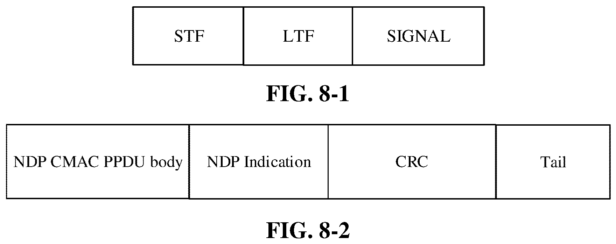

In one example, the first frame is an NDP CMAC PPDU frame. The NDP CMAC PPDU frame may only include a PPDU header, and not include a data portion. The full name of NDP CMAC is a null data PPDU carrying medium access control. The structure of the PPDU header of the NDP CMAC PPDU frame is shown in FIG. 8-1, which includes a short training field (STF), a long training field (LTF), and a SIGNAL field. Herein, the structure of the SIGNAL field is shown in FIG. 8-2, which includes a NDP CMAC PPDU body field and a NDP Indication field, a CRC field, and a Tail field. The NDP CMAC PPDU body field includes NDP CMAC PPDU Type information and related control information. For example, if the NDP CMAC PPDU type information indicates that the NDP is a CTS, the control information carried by the NDP may be CTS information, and the NDP frame may be an NDP CTS frame. The NDP CMAC PPDU body field contains a Duration field (i.e., the first field).

The aforementioned NDP CMAC PPDU frame is only an example of the first frame, and is not limited thereto. Moreover, the first frame may also be an NDP CF-End frame, an NDP ACK frame, an NDP PS-Poll-Ack frame, a VHT NDP Announcement frame, or the like, and such types of frames may include only a PPDU header, and the PPDU header may include a Duration field (i.e., the first field).

In some implementations, the PPDU frame may include a PPDU header and a MAC frame, and the MAC frame may include the first field. Specifically, the MAC frame may include a MAC header, and the MAC header may include the first field. Herein, the frame type of the MAC frame may include at least one of the following: a data frame, a control frame, or a management frame.

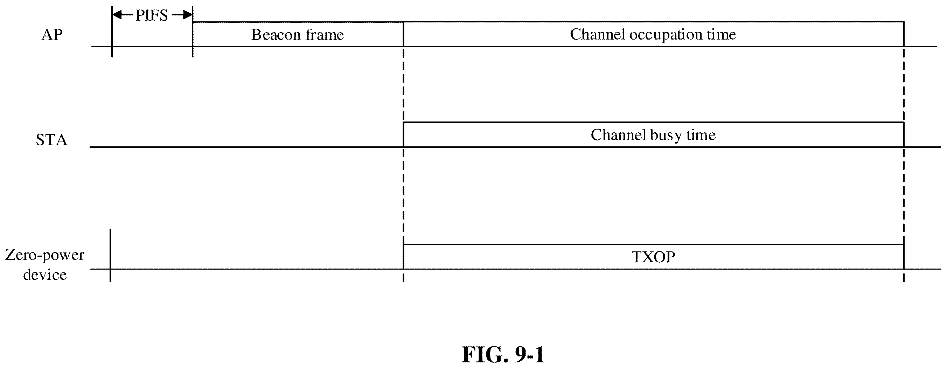

In one example, the first device may be an AP, and the first frame may be a beacon frame. The AP is required to perform the channel access periodically to transmit the beacon frame periodically. In the Duration field (i.e., the first field) in the MAC header of the beacon frame, the AP may set a certain channel occupation time. In conventional technologies, the Duration field is set to 0, which means that the AP does not continue to occupy the channel after completing the transmission of the beacon frame. In the schemes of the present disclosure, the Duration field is set to a nonzero value, which means that the AP may continue to occupy the channel after completing the transmission of the beacon frame, and the time for continuously occupying the channel may be the channel occupation time indicated by the Duration field. The AP may share all or part of the channel occupation time with the first-type device or the third device for use. As shown in FIG. 9-1, the AP waits for the PIFS, and if the channel is idle during the PIFS, the AP enters the backoff process after the end of the PIFS and selects the reference random backoff counter value to be 0; and the AP may immediately occupy the channel to transmit the beacon frame. The Duration field in the MAC header of the beacon frame may set the channel occupation time. After monitoring the Duration field in the MAC header of the beacon frame, the STA (i.e., the second device) may set or update, based on the Duration field, the NAV of the STA, and may further consider the time corresponding to the NAV counting down to 0 to be the channel busy time. During the channel busy time, the STA may be in a suspended state and may not attempt to perform the channel access. The zero-power device may regard all or part of the channel occupation time as a channel reservation time for the zero-power device. Here, the channel reservation time may also be described as a transmission opportunity (TXOP), a service period (SP), an available time, or the like.

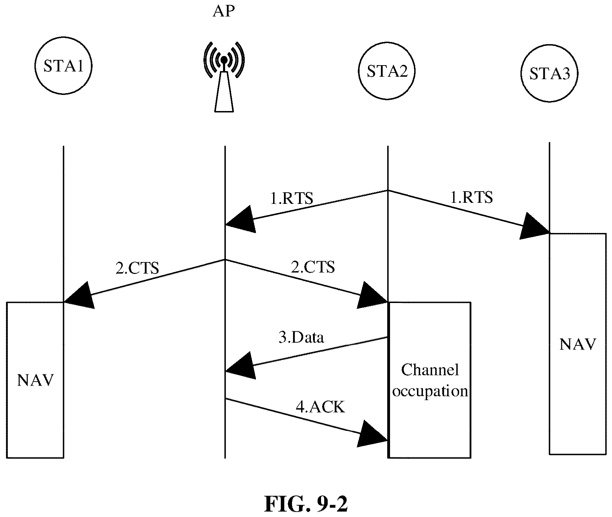

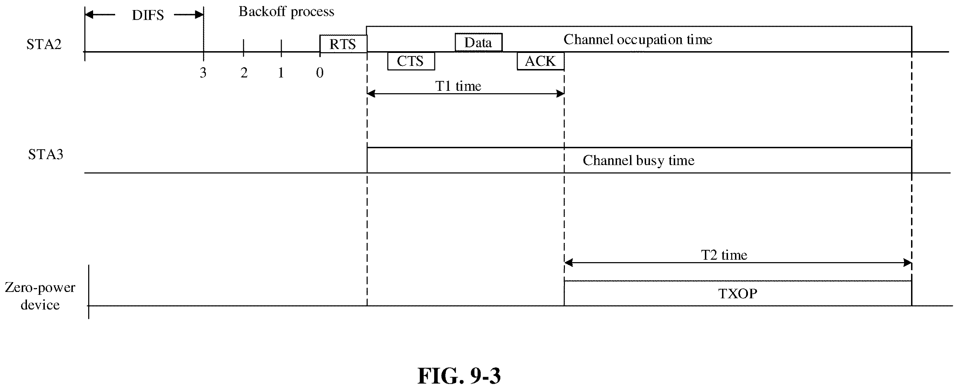

In one example, the first device may be a STA or AP, and the first frame may be an RTS frame. The basic flow of the RTS/CTS protocol is firstly explained below. As shown in FIG. 9-2, before transmitting data to the AP, a STA2 is required to transmit an RTS frame to the AP. Since the RTS frame is transmitted on the broadcast channel, the RTS frame can also be received by a STA3, which sets or updates, based on the Duration field in the MAC header of the RTS frame, the NAV of the STA3. After receiving the RTS frame, the AP replies to the STA2 with a CTS frame. Since the CTS frame is transmitted on the broadcast channel, the CTS frame can also be received by a STA1, which sets or updates, based on the Duration field in the MAC header of the CTS frame, the NAV of the STA1. Then, the STA2 transmits a data frame to the AP, and the AP transmits an ACK frame to the STA2. Here, the time at which the NAV of the STA1 is to zero may be the same as the time at which the NAV of the STA3 is to zero, that is, the time at which the NAV(s) is to zero may follow the ACK frame transmitted between the AP and the STA2. In the conventional technologies, the Duration field in the MAC header of the RTS frame is set to a T1 time, which means that the channel is continuously occupied for the T1 time after the transmission of the RTS frame is completed, and the T1 time is the channel reservation time for the STA2. In the schemes of the present disclosure, the Duration field in the MAC header of the RTS frame may be set to a T time, and the T time = T1 time + T2 time, where the T1 time is the channel reservation time for the STA2, and the T2 time is the channel reservation time for the zero-power device. As shown in FIG. 9-3, the STA2 waits for the DIFS, and if the channel is idle during the DIFS, the STA2 enters the backoff process after the end of the DIFS and selects the reference random backoff counter value to be 3, Additionally, the STA2 monitors the channel during each slot time following the PIFS, and if the channel is idle, the random backoff counter value is reduced by one. When the random backoff counter value is 0, the STA2 may occupy the channel to transmit the RTS frame. The Duration field in the MAC header of the RTS frame may be set to be the T time, which is the channel occupation time. The T time =T1 time + T2 time, where T1 time is the channel reservation time for the STA2, and T2 time is the channel reservation time for the zero-power device. The channel reservation time may also be described as a TXOP, a SP or available time, etc. After monitoring the Duration field in the MAC header of the RTS frame, the STA3 may set or update, based on the Duration field, the NAV of the STA3, and may further consider the time corresponding to the NAV counting down to 0 to be the channel busy time. During the channel busy time, the STA3 may be in a suspended state and may not attempt to perform the channel access. The zero-power device may use the T2 time in the channel occupation time as the channel reservation time for the zero-power device. The channel reservation time may also be described as a TXOP, a SP or an available time, etc. Of course, the T1 time may not exist. In such case, the purpose of the STA2 transmitting the RTS frame is not to reserve the channel for the STA2, but to reserve the channel for the zero-power device, and the channel occupation time can be understood as the channel reservation time for the zero-power device.

In some implementations, the transmission coverage of the RTS frame may be enhanced, so that as many second devices as possible can receive the RTS frame, thereby setting the NAV and avoiding collisions of channel access. For example, the first device may transmit the RTS frame at a higher power or a lower data rate, or the first device may repeatedly transmit the RTS frame. Here, any RTS frame transmitted following the RTS frame that is repeatedly transmitted does not affect the setting of the NAV of the second device through the RTS frame that is previously transmitted. That is, the time at which the NAV is to zero set based on the repeatedly transmitted RTS frame may be the same.

The aforementioned beacon frame and the RTS frame are only some examples of the first frame, and are not limited thereto, the first frame may be other types of frames, such as, a data frame, other types of management frames or control frames. Herein, other types of management frames or control frames may include, but are not limited to, a trigger frame, such as a QoS Null/QoS data frame, a sync frame, an ACK frame, a Poll frame, a Grant frame, a Grant Ack frame, a CTS frame, a CF-End frame, a S1G beacon frame, a service period request (SPR) frame, a directional multi-gigabit (DMG) beacon frame, a DMG CTS frame, a DMG denial to send (DTS) frame, a sector sweep (SSW) frame, a SSW Feedback frame, a SSW-Ack frame, a Beamforming Report Poll frame, a TACK frame, a QoS (+) CF-Poll frame, etc. Part of these types of frames may be transmitted by the AP, and another part of these types of frames may be transmitted by the STA.

In an embodiment of the present disclosure, the first frame may be referred to as a NAV-setting frame, and when the first device transmits such type of frame, the second device may set the NAV, thereby realizing the reservation of channel occupation time for the first-type device or the third device. The first frame may also be a PPDU frame compatible with an existing device. Optionally, if the zero-power communication is supported in a new frequency band, the frame with the channel occupation time reserved for the zero-power device may be defined accordingly, and the specific implementation manner of the type of the first frame is not limited in the present disclosure.

In an embodiment of the present disclosure, the first field in the first frame may be used to indicate the channel occupation time (which may also be referred to as the "duration"). Here, he channel occupation time may refer to the duration for which the first device continues to occupy the channel after the transmission of the first frame, and the unit may be microseconds. For this purpose, the transmitter (i.e., the first device) of the first frame is required to calculate the length of time for which the channel is continuously occupied after the end of the first frame, and further set the value of the first field based on this.

In some implementations, the length of the channel occupation time may be determined based on the length of the first time and the length of the second time. The first time may be the channel reservation time for the first device, and the second time may be the channel reservation time for the first-type device or the third device.

Herein, in a case where the first device occupies, by its own transmission, the channel for the first-type device or the third device, the channel occupation time = T1 time + T2 time, where the T1 time (i.e., the first time) is the channel reservation time for the first device, the T2 time (i.e., the second time) is the channel reservation time for the first-type device or the third device, The T2 time may be understood as a TXOP, a SP or an available time of the first-type device or the third device. Herein, the channel reservation time for the first device may be related to the transmission involved by the first device. Taking the first frame to be an RTS frame as an example, the channel reservation time for the first device may be a sum of the transmission time of the CTS frame, the transmission time of the data frame, the transmission time of the ACK frame and the three SIFSs. Taking the first frame to be a data frame as an example, the channel reservation time for the first device may be a sum of the transmission time of the ACK frame and one SIFS.

In some implementations, the length of the channel occupation time may be determined based on the length of the second time. The second time may be the channel reservation time for the first-type device or the third device.

Herein, in a case where the first device occupies the channel dedicated to the transmission of the first-type device or the third device, the channel occupation time = T2 time, where the T2 time (i.e., the second time) is the channel reservation time for the first-type device or the third device. The T2 time may be understood as a TXOP, a SP or an available time of the first-type device or the third device, etc.

In the above schemes, a position of the second time may be determined based on a position of a target wake time of the first-type device or the third device and/or a position of a restricted access time of the first-type device or the third device.

Here, the target wake time of the first-type device or the third device may be a TWT, and the TWT occurs periodically. The restricted access time of the first-type device or the third device may be a RAW or a RAW slot within the RAW allocated to the first-type device or the third device. The position of the second time is required to cover as much as possible the TWT, the RAW or the RAW slot assigned to the first-type device or the third device, so that upon the arrival of the TWT, RAW or the RAW slot assigned to the first-type device or the third device, the first-type device or the third device can effectively occupy the channel for the communication by using the second time.

In some implementations, the method may further include the following operation 602:
At block 602, the first device may transmit a first signal, and the third device may receive the first signal from the first device, where the first signal is used to determine the channel reservation time for the first-type device or the third device.

Here, the channel reservation time may be used for the first-type device or the third device to communicate on the first channel. The channel reservation time for the first-type device or the third device may be all or part of the channel occupation time obtained by the first device. In the case where the length of the channel occupation time is determined based on the length of the first time and the length of the second time in the above schemes, the channel reservation time for the first-type device or the third device may be a part of the channel occupation time obtained by the first device. In the case where the length of the channel occupation time is determined based on the length of the second time in the above schemes, the channel reservation time for the first-type device or the third device may be the entire channel occupation time obtained by the first device.

Herein, the channel reservation time for the first-type device or the third device may also be understood as a TXOP or an SP, an available time, or the like of the first-type device or the third device.

In an embodiment of the present disclosure, the first device may perform the channel access and indicate the channel occupation time through the first field in the first frame. The first frame may be transmitted based on a conventional physical layer air interface technology (referred to as a second physical layer air interface technology), and the second physical layer air interface technology may be a physical layer air interface technology supported by the second device, so that the second device can receive the first frame, and further set or update, based on the first field in the first frame, the NAV of the second device. For the first-type device or the third device, since the first-type device or the third device does not support the second physical layer air interface technology, the first-type device or the third device cannot receive the first frame. In order for the first-type device or the third device to obtain the information related to the channel reservation time for the first-type device or the third device, the first device nay transmit the first signal based on the first physical layer air interface technology. Correspondingly, the third device may receive the first signal from the first device based on the first physical layer air interface technology. Herein, the first physical layer air interface technology may be the physical layer air interface technology supported by the third device. Thus, the third device can receive the first signal and further determine, based on the first signal, the channel reservation time that can be used by the third device.

In an embodiment of the present disclosure, the first physical layer air interface technology may be different from the second physical layer air interface technology. As an example, the second physical layer air interface technology may be a conventional modem scheme and/or a conventional coding scheme, and the conventional modem scheme is a modulation scheme such as OFDM. The first physical layer air interface technology may be a simple modulation and demodulation scheme and/or a simple coding scheme. The simple modulation and demodulation method is, for example, a modulation method such as ASK and FSK, and the simple coding scheme is, for example, the modulation scheme such as a repetitive coding, a Manchester coding, a block coding, and a block coding.

In some implementations, the first signal may include at least one of the following:
a first information, used to indicate the channel occupation time;
a second information, used to indicate a device or a group of devices that are able to use the channel occupation time;
a third information, used to indicate a channel reservation time for the first-type device or the third device within the channel occupation time; or
a fourth information, used to indicate that the channel occupation time is obtained by the first device.

Here, the first information may indicate one or more of a start point, an end point, and a length of the channel occupation time.

Here, the second information may be a device ID or a device group ID.

Here, the third information may indicate one or more of a start point, an end point, and a length of the channel reservation time for the first-type device or the third device. Herein, the channel reservation may also be described as a TXOP, a SP, an available time, or the like.

Here, the fourth information may be a BSSID, a compressed SSID or a STA ID of the first device, or other identification that may indicate the first device.

In some implementations, the first signal may be transmitted after the first frame. After performing the channel access, the first device may transmit the first frame, and then transmit the first signal.

In some implementations, the first signal may be transmitted before the first frame. After performing the channel access, the first device may transmit the first signal, and then transmit the first frame.

In some implementations, the first signal may include a preamble portion and a load portion, where the preamble portion is used to identify and/or synchronize the first signal, and the load portion is used to carry information in the first signal.

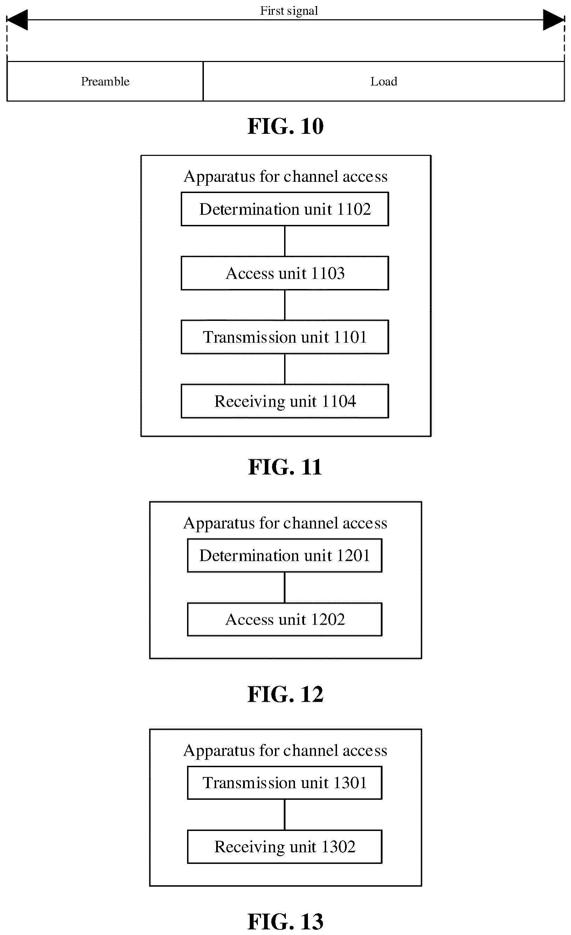

As an example, FIG. 10 shows a format of the first signal, which includes a preamble portion and a load portion. Herein, the preamble portion may also be referred to as a zero-power preamble, and the load portion may include at least one of the first information, the second information, the third information, or the fourth information mentioned above.

In some implementations, the first device may transmit a second signal, and accordingly, the third device may receive the second signal from the first device. Here, the first device may transmit the second signal during a second time, which refers to a channel reservation time for the first-type device or the third device. It should be noted that, in addition to the foregoing first signal transmitted in an initial stage of the second time, the first device may also transmit another signal (referred to as the second signal) during the second time. The second signal may include at least one of the following:
a fifth information, used to indicate that one channel usage time is allocated to the third device;
a sixth information, which is allocation information of a channel usage time of the third device;
a seventh information, used to respond to transmission by the third device;
an eighth information, used to indicate that the first device has cache data that is required to be transmitted to the third device;
a ninth information, used for the third device to perform time synchronization; or
data transmitted from the first device to the third device.

Here, as one case, the second time may be the channel reservation time for the third device, and in such case, the third device may use the channel reservation time as the channel usage time of the third device. As another case, the second time may be the channel reservation time for the first-type device, and in such case, the first device may dynamically allocate the channel usage time of the third device within the range of the second time. Specifically, the first device may indicate, through the fifth information, that one channel usage time is allocated to the third device, and/or, the first device may implement, through the sixth information, the allocation information of the usage time of the third device. Here, the sixth information may also be referred to as the channel allocation information for allocating one channel usage time to the third device.

Here, the seventh information may be used to respond to the transmission of the data frame by the third device, and accordingly, the seventh information may be an ACK frame. Without being limited thereto, the seventh information may be used to respond to the transmission of another frame that is required to be responded to by the third device.

Here, the eighth information may be paging information or traffic indication map (TIM) information, which is used to indicate that the first device has cache data to be transmitted to the third device.

Here, the ninth information may be synchronization information, such as timing synchronization function (TSF) information, which is used for the third device to perform time synchronization.

Similar to the transmission mode of the first signal, the first device may transmit the second signal based on the first physical layer air interface technology. The first physical layer air interface technology may be the physical layer air interface technology supported by the third device, so that the third device can receive the second signal. Accordingly, the third device may receive the second signal from the first device based on the first physical layer air interface technology.

In some implementations, the method may further include the following operation 603.

At block 603, the third device may transmit a third signal, and the first device may receive the third signal from the third device.

Here, after the first device transmits the foregoing first signal in the initial stage of the second time, the third device may transmit the third signal to the first device by using the first channel during the channel reservation time for the third device. Accordingly, the first device may receive the third signal from the third device on the first channel. Herein, the third signal may include at least one of the following:
a tenth information, used to respond to transmission by the first device;
an eleventh information, used to request the first device to allocate one channel usage time to the third device;
a twelfth information, used to request the first device to transmit cache data to the third device; or
data transmitted from the third device to the first device.

Here, the tenth information may be used to respond to the transmission of the data frame by the first device, and accordingly, the tenth information may be an ACK frame. Alternatively, the tenth information may be used to respond the transmission of a Grant frame by the first device, and accordingly, the tenth information may be a Grant ACK frame. Without being limited thereto, the tenth information may be used to respond to the transmission of another frame that is required to be responded to by the first device.

Here, the eleventh information may be the trigger information for requesting or triggering the first device to allocate the channel usage time to the third device, Here, the channel usage time may also be referred to as a TXOP, an SP, an available time window, an available time period, or the like.

Here, the twelfth information may be a Poll frame, which is used to request the first device to transmit the cache data to the third device.

Similar to the transmission mode of the first signal, the third device may transmit the third signal based on the first physical layer air interface technology; and accordingly, the first device may receive the third signal from the third device based on the first physical layer air interface technology. The first physical layer air interface technology may be the physical layer air interface technology supported by the third device.

In the above schemes, the second time may be the channel reservation time for the first-type device or the third device, and the channel reservation time may be dedicated to the third device or common to the first-type device.

In an option 1), if the channel reservation time is dedicated to the third device, the third device may determine the channel reservation time as the channel usage time of the third device.

In an option 2), if the channel reservation time is common to the first-type device, the third device may determine the channel usage time of the third device within the channel reservation time.

Herein, as an implementation, the third device may determine, based on an energy detection result of the first channel, the channel usage time of the third device within the channel reservation time. For example, the third device may perform CCA detection on the first channel during the second time, and if the channel is idle, the third device may consider that the current time belongs to the channel usage time of the third device to perform the transmission. Thus, the collision with the transmission of other devices can be avoided.

Herein, as an implementation, the third device may determine, based on a first rule, the channel usage time of the third device within the channel reservation time, where the first rule may be used to divide the channel reservation time into a plurality of channel usage times, and different channel usage times belong to different devices. For example, the channel reservation time may be divided into a plurality of channel usage times, different devices may perform transmission at different channel usage times, The division rule of the channel usage time may be related to the ID of the device, and the third device may determine, according to its own ID, the channel usage time of the third device, and then perform the transmission in the channel usage time of the third device, to avoid collision with the transmission of other devices.

It is noted that, in the above schemes, the scheme related to the operation 600, the scheme related to the operation 601, the scheme related to the operation 602 and the scheme related to the operation 603 may be implemented individually or in any combination.

According to the technical schemes of the embodiments of the present disclosure, the method for channel access can be implemented, the first device with the channel access capability may perform the channel occupation for the first-type device or the third device without the channel access capability, to enable the first-type device or the third device to obtain the channel usage time. The first device may indicate the channel occupation time through the first field in the first frame, and accordingly, the second device may set or update the NAV of the second device, and the second device may not occupy the channel during the time corresponding to the NAV counting down to 0, so as to avoid the transmission collision. The technical schemes can ensure the compatibility with the conventional device channel access mechanism, and further realize the communication of the third device.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical schemes of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no collision, various embodiments described in the present disclosure and/or the technical features in the various embodiments may be combined with the related art in any manner. The technical schemes obtained after the combination shall also fall within the scope of protection of the present disclosure.

It should be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2. For example, a "downlink signal" means that the signal is transmitted in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

FIG. 11 is a first schematic diagram of a structural composition of an apparatus for channel access according to an embodiment of the present disclosure, and the apparatus is applied to a first device. As shown in FIG. 11, the apparatus for channel access includes a transmission unit 1101.

The transmission unit 1101 is configured to transmit a first frame, where the first frame includes a first field, the first field is used to indicate a channel occupation time of a first channel; the first field is used for a second device to set or update a network allocation vector (NAV), the NAV is used for the second device to determine a busy time of the first channel; all or part of the channel occupation time is used for a first-type device or a third device to communicate on the first channel, and the third device belongs to the first-type device.

In some implementations, the first frame may be a physical layer protocol data unit (PPDU) frame, the PPDU frame may include a PPDU header, and the PPDU header may include the first field.

In some implementations, the PPDU header may include a short training field, a long training field and a signal field, and the signal field may include the first field.

In some implementations, the first frame may be a PPDU frame, the PPDU frame may include a PPDU header and a media access control (MAC) frame, and the MAC frame may include the first field.

In some implementations, the MAC frame may include a MAC header, and the MAC header may include the first field.

In some implementations, a frame type of the MAC frame may include at least one of the following: a data frame, a control frame, or a management frame.

In some implementations, a length of the channel occupation time may be determined based on a length of a first time and a length of a second time; or, a length of the channel occupation time may be determined based on a length of a second time. The first time may be a channel reservation time for the first device, and the second time may be a channel reservation time for the first-type device or the third device.

In some implementations, a position of the second time may be determined based on a position of a target wake time of the first-type device or the third device and/or a position of a restricted access time of the first-type device or the third device.

In some implementations, the apparatus may further include a determination unit 1102 and an access unit 1103.

The determination unit 1102 may be configured to determine a channel access parameter related to the first-type device or the third device.

The access unit 1103 may be configured to perform the channel access on the first channel based on the channel access parameter.

In some implementations, the channel access parameter may be determined based on at least one of following of the first-type device or the third device: a device type, a device group, a type of transmitted data, a type of a transmitted PPDU frame, a channel access time, a target wake time, or a restricted access time.

In some implementations, the channel access time may be determined based on the target wake time and/or the restricted access time.

In some implementations, the channel access parameter may include at least one of the following:
a first parameter, used to indicate a size of a contention window; or
a second parameter, used to indicate a size or type of an interframe space corresponding to a waiting time.

In some implementations, the transmission unit 1101 may further be configured to transmit a first signal, where the first signal may be used to determine a channel reservation time for the first-type device or the third device.

In some implementations, the transmission unit 1101 may be configured to transmit the first signal based on a first physical layer air interface technology, where the first physical layer air interface technology may be a physical layer air interface technology supported by the third device.

In some implementations, the first signal may include at least one of the following:
a first information, used to indicate the channel occupation time;
a second information, used to indicate a device or a group of devices that are able to use the channel occupation time;
a third information, used to indicate a channel reservation time for the first-type device or the third device within the channel occupation time; or
a fourth information, used to indicate that the channel occupation time is obtained by the first device.

In some implementations, the first signal may include a preamble portion and a load portion, the preamble portion may be used to identify and/or synchronize the first signal, and the load portion may be used to carry information in the first signal.

In some implementations, the first signal may be transmitted after the first frame; or the first signal may be transmitted before the first frame.

In some implementations, the transmission unit 1101 may further be configured to transmit a second signal, and the second signal may include at least one of the following:
a fifth information, used to indicate that one channel usage time is allocated to the third device;
a sixth information, which is allocation information of a channel usage time of the third device;
a seventh information, used to respond to transmission by the third device;
an eighth information, used to indicate that the first device has cache data that is required to be transmitted to the third device;
a ninth information, used for the third device to perform time synchronization; or
data transmitted from the first device to the third device.

In some implementations, the transmission unit 1101 may be configured to transmit the second signal based on a first physical layer air interface technology, where the first physical layer air interface technology may be a physical layer air interface technology supported by the third device.

In some implementations, the apparatus may further include a receiving unit 1104, and the receiving unit 1104 may be configured to receive a third signal from the third device. The third signal may include at least one of the following:
a tenth information, used to respond to transmission by the first device;
an eleventh information, used to request the first device to allocate one channel usage time to the third device;
a twelfth information, used to request the first device to transmit cache data to the third device; or
data transmitted from the third device to the first device.

In some implementations, the receiving unit 1104 may be configured to receive a third signal from the third device based on a first physical layer air interface technology, where the first physical layer air interface technology may be a physical layer air interface technology supported by the third device.

In some implementations, the first physical layer air interface technology may be different from a second physical layer air interface technology, and the second physical layer air interface technology may be a physical layer air interface technology supported by the second device.

It is to be understood by those skilled in the art that the relevant description of the aforementioned apparatus for channel access in the embodiments of the present disclosure may be understood with reference to the relevant description of the method for channel access in the embodiments of the present disclosure.

FIG. 12 is a second schematic diagram of a structural composition of an apparatus for channel access according to an embodiment of the present disclosure, and the apparatus is applied to a first device. As shown in FIG. 12, the apparatus for channel access includes a determination unit 1201 and an access unit 1202.

The determination unit 1201 is configured to determine a channel access parameter related to a first-type device or a third device.

An access unit 1202 is configured to perform the channel access on a first channel based on the channel access parameter, to obtain a channel occupation time of the first channel. Herein, all or part of the channel occupation time is used for the first-type device or the third device to communicate on the first channel, and the third device belongs to the first-type device.

In some implementations, the channel access parameter may be determined based on at least one of following of the first-type device or the third device: a device type, a device group, a type of transmitted data, a type of a transmitted PPDU frame, a channel access time, a target wake time, or a restricted access time.

In some implementations, the channel access time may be determined based on the target wake time and/or the restricted access time.

In some implementations, the channel access parameter may include at least one of the following:
a first parameter, used to indicate a size of a contention window; or
a second parameter, used to indicate a size or type of an interframe space corresponding to a waiting time.

It is to be understood by those skilled in the art that the relevant description of the aforementioned apparatus for channel access in the embodiments of the present disclosure may be understood with reference to the relevant description of the method for channel access in the embodiments of the present disclosure.

FIG. 13 is a third schematic diagram of a structural composition of an apparatus for channel access according to an embodiment of the present disclosure, and the apparatus is applied to a first device. As shown in FIG. 13, the apparatus for channel access includes a transmission unit 1301.

The transmission unit 1301 is configured to transmit a first signal, where the first signal is used to determine a channel reservation time for a first-type device or a third device; the channel reservation time is used for the first-type device or the third device to communicate on a first channel, and the third device belongs to the first-type device.

In some implementations, the transmission unit 1301 may be configured to transmit the first signal based on a first physical layer air interface technology, where the first physical layer air interface technology may be a physical layer air interface technology supported by the third device.

In some implementations, the first signal may include at least one of the following:
a first information, used to indicate the channel occupation time;
a second information, used to indicate a device or a group of devices that are able to use the channel occupation time;
a third information, used to indicate a channel reservation time for the first-type device or the third device within the channel occupation time; or
a fourth information, used to indicate that the channel occupation time is obtained by the first device.

In some implementations, the first signal may include a preamble portion and a load portion, the preamble portion is used to identify and/or synchronize the first signal, and the load portion is used to carry information in the first signal.

In some implementations, the transmission unit 1301 may further be configured to transmit a second signal, the second signal may include at least one of the following:
a fifth information, used to indicate that one channel usage time is allocated to the third device;
a sixth information, which is allocation information of a channel usage time of the third device;
a seventh information, used to respond to transmission by the third device;
an eighth information, used to indicate that the first device has cache data that is required to be transmitted to the third device;
a ninth information, used for the third device to perform time synchronization; or
data transmitted from the first device to the third device.

In some implementations, the transmission unit 1301 may be configured to transmit the second signal based on a first physical layer air interface technology, where the first physical layer air interface technology may be a physical layer air interface technology supported by the third device.

In some implementations, the apparatus may further include a receiving unit 1302, the receiving unit 1104 may be configured to receive a third signal transmitted by the third device, and the third signal may include at least one of the following:
a tenth information, used to respond to transmission by the first device;
an eleventh information, used to request the first device to allocate one channel usage time to the third device;
a twelfth information, used to request the first device to transmit cache data to the third device; or
data transmitted from the third device to the first device.

In some implementations, the receiving unit 1302 may be configured to receive a third signal from the third device based on a first physical layer air interface technology, where the first physical layer air interface technology may be a physical layer air interface technology supported by the third device.

In some implementations, the first physical layer air interface technology may be different from a second physical layer air interface technology, and the second physical layer air interface technology may be a physical layer air interface technology supported by the second device.

It is to be understood by those skilled in the art that the relevant description of the aforementioned apparatus for channel access in the embodiments of the present disclosure may be understood with reference to the relevant description of the method for channel access in the embodiments of the present disclosure.

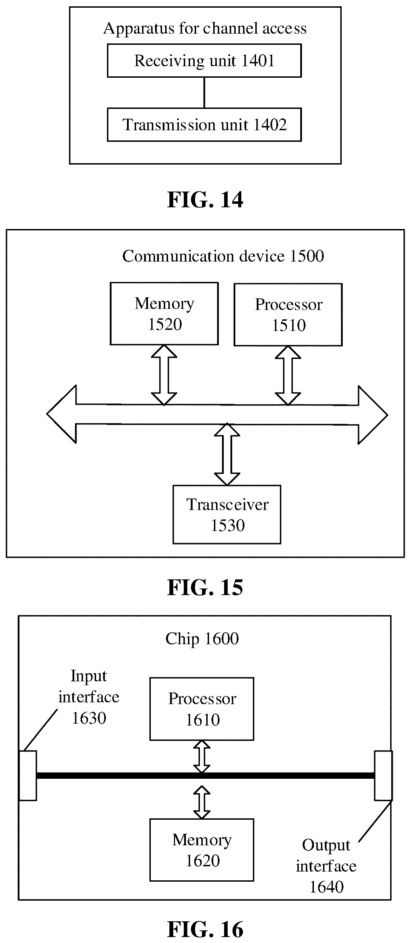

FIG. 14 is a fourth schematic diagram of a structural composition of an apparatus for channel access according to an embodiment of the present disclosure, and the apparatus is applied to a third device. As shown in FIG. 14, the apparatus for channel access includes a receiving unit 1401.

The receiving unit 1401 is configured to receive a first signal from a first device, where the first signal is used to determine a channel reservation time for a first-type device or a third device; the channel reservation time is used for the first-type device or the third device to communicate on the first channel, and the third device belongs to the first-type device.

In some implementations, the receiving unit 1401 may be configured to receive a first signal from the first device based on a first physical layer air interface technology, where the first physical layer air interface technology is a physical layer air interface technology supported by the third device.

In some implementations, the first signal may include at least one of the following:
a first information, used to indicate the channel occupation time;
a second information, used to indicate a device or a group of devices that are able to use the channel occupation time;
a third information, used to indicate a channel reservation time for the first-type device or the third device within the channel occupation time; or
a fourth information, used to indicate that the channel occupation time is obtained by the first device.

In some implementations, the first signal may include a preamble portion and a load portion, the preamble portion is used to identify and/or synchronize the first signal, and the load portion may be used to carry information in the first signal.

In some implementations, the receiving unit 1401 may further be configured to receive a second signal from the first device, and the second signal includes at least one of the following:
a fifth information, used to indicate that one channel usage time is allocated to the third device;
a sixth information, which is allocation information of a channel usage time of the third device;
a seventh information, used to respond to transmission by the third device;
an eighth information, used to indicate that the first device has cache data that is required to be transmitted to the third device;
a ninth information, used for the third device to perform time synchronization; or
data transmitted from the first device to the third device.

In some implementations, the receiving unit 1401 may be configured to receive a second signal from the first device based on a first physical layer air interface technology, where the first physical layer air interface technology may be a physical layer air interface technology supported by the third device.

In some implementations, the apparatus may further include a transmission unit 1402 for transmitting a third signal, and the third signal may include at least one of the following:
a tenth information, used to respond to transmission by the first device;
an eleventh information, used to request the first device to allocate one channel usage time to the third device;
a twelfth information, used to request the first device to transmit cache data to the third device; or
data transmitted from the third device to the first device.

In some implementations, the transmission unit 1402 may be configured to transmit a third signal based on a first physical layer air interface technology, where the first physical layer air interface technology may be a physical layer air interface technology supported by the third device.

In some implementations, the first physical layer air interface technology may be different from a second physical layer air interface technology, and the second physical layer air interface technology may be a physical layer air interface technology supported by the second device.

In some implementations, the apparatus may further include a determination unit. The determination unit may be configured to determine, if a channel reservation time is dedicated to the third device, the channel reservation time as its channel usage time; or, the determination unit may be configured to determine, if the channel reservation time is common to the first-type device, the channel usage time of the third device within the channel reservation time.

In some implementations, the determination unit may be configured to determine, based on an energy detection result of the first channel, its channel usage time within the channel reservation time.

In some implementations, the determination unit may be configured to determine, based on a first rule, its channel usage time within the channel reservation time, where the first rule may be used to divide the channel reservation time into a plurality of channel usage times, and different channel usage times belong to different devices.

It is to be understood by those skilled in the art that the relevant description of the aforementioned apparatus for channel access in the embodiments of the present disclosure may be understood with reference to the relevant description of the method for channel access in the embodiments of the present disclosure.

FIG. 15 is a schematic structural diagram of a communication device 1500 according to an embodiment of the present disclosure. The communication device 1500 illustrated in FIG. 15 includes a processor 1510. The processor 1510 may be configured to call and run a computer program stored in a memory to perform each of the methods according to the embodiments of the present disclosure.

Optionally, as illustrated in FIG. 15, the communication device 1500 may further include a memory 1520. Herein, the processor 1510 may be configured to call and run the computer program stored in the memory 1520 to perform each of the methods according to the embodiments of the present disclosure.

Herein, the memory 1520 may be a separate device independent of the processor 1510, or may be integrated into the processor 1510.

Optionally, as illustrated in FIG. 15, the communication device 1500 may further include a transceiver 1530. The processor 1510 may control the transceiver 1530 to communicate with other devices. Specifically, the transceiver 1530 may transmit information or data to other devices, or receive information or data from other devices.

Herein, the transceiver 1530 may include a transmitter and a receiver. The transceiver 1530 may further include one or more antennas.

Optionally, the communication device 1500 may specifically be the first device in the embodiments of the present disclosure. The communication device 1500 may implement the corresponding processes that are implemented by the first device in each of the methods in the embodiments of the present disclosure. For brevity, details are not elaborated herein again.

Optionally, the communication device 1500 may specifically be the third device in the embodiments of the present disclosure. The communication device 1500 may implement the corresponding processes that are implemented by the third device in each of the methods in the embodiments of the present disclosure. For brevity, details are not elaborated herein again.

FIG. 16 is a schematic structural diagram of a chip according to an embodiment of the present disclosure. The chip 1600 illustrated in FIG. 16 includes a processor 1610. The processor 1610 may be configured to call and run a computer program stored in a memory to perform each of the methods according to the embodiments of the present disclosure.

Optionally, as illustrated in FIG. 16, the chip 1600 may further include a memory 1620. Herein, the processor 1610 may be configured to call and run the computer program stored in the memory 1620 to perform each of the methods according to the embodiments of the present disclosure.

Herein, the memory 1620 may be a separate device independent of the processor 1610, or may be integrated into the processor 1610.

Optionally, the chip 1600 may further include an input interface 1630. Herein, the processor 1610 may control the input interface 1630 to communicate with other devices or chips. Specifically, the input interface 1630 may obtain information or data from other devices or chips.

Optionally, the chip 1600 may further include an output interface 1640. Herein, the processor 1610 may control the output interface 1640 to communicate with other devices or chips. Specifically, the output interface 1640 may output information or data to other devices or chips.

Optionally, the chip may be applied to the first device in the embodiments of the present disclosure. The chip may implement the corresponding processes implemented by the first device in each of the methods in the embodiments of the present disclosure. For brevity, details are not elaborated herein again.

Optionally, the chip may be applied to the third device in embodiments of the present disclosure. The chip may implement the corresponding processes implemented by the third device in each of the methods in the embodiments of the present disclosure. For brevity, details are not described herein again.

It should be understood that, the chip referred to in the embodiments of the present disclosure may also be referred to as a system-level chip, a system chip, a chip system, or a system-on-chip, etc.

It should be understood that the processor in the embodiments of the present disclosure may be an integrated circuit chip having a signal processing capability. During an implementation process, various operations in the aforementioned method embodiments may be implemented by using an integrated logic circuit in a hardware form in the processor or implemented by using instructions in a software form. The foregoing processor may be a general-purpose processor, a digital signal processor (DSP), an application-specific integrated circuit (ASIC), a field programmable gate array (FPGA), or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the methods disclosed in the embodiments of the present disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, a register a register, or the like. The storage medium is located in the memory, and the processor reads information in the memory to complete the operations of the foregoing methods in combination with hardware of the processor.

It can be understood that the memory in the embodiments of the present disclosure may be a volatile memory or a non-volatile memory, or may include both the volatile memory and the non-volatile memory. The non-volatile memory may be an ROM, a PROM, an erasable PROM (EPROM), an electrically EPROM (EEPROM) or a flash memory. The volatile memory may be an RAM and is used as an external high-speed cache. It is exemplarily but unlimitedly described that RAMs in various forms may be adopted, such as a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and methods described herein is intended to include, but not be limited to, memories of these and any other suitable types.

It should be understood that the aforementioned memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. That is, the memory in the embodiments of the present disclosure is intended to include, but not be limited to, memories of these and any other suitable types.

An embodiment of the present disclosure further provides a computer-readable storage medium configured to store a computer program.

Optionally, the computer-readable storage medium may be applied to the first device in the embodiments of the present disclosure, and the computer program causes a computer to perform the corresponding processes performed by the first device in each of the methods in the embodiments of the present disclosure. For brevity, details are not elaborated herein again.

Optionally, the computer-readable storage medium may be applied to the third device in the embodiments of the present disclosure, and the computer program causes a computer to perform the corresponding processes performed by the third device in each of the methods in the embodiments of the present disclosure. For brevity, details are not described herein again.

An embodiment of the present disclosure further provides a computer program product, which includes computer program instructions.

Optionally, the computer program product may be applied to the first device in the embodiments of the present disclosure, and the computer program instructions cause a computer to perform the corresponding processes performed by the first device in each of the methods in the embodiments of the present disclosure. For brevity, details are not elaborated herein again.

Optionally, the computer program product may be applied to the third device in the embodiments of the present disclosure, and the computer program instructions cause a computer to perform the corresponding processes performed by the third device in each of the methods in the embodiments of the present disclosure. For brevity, details are not described herein again.

An embodiment of the present disclosure further provides a computer program.

Optionally, the computer program may be applied to the first device in the embodiments of the present disclosure, and the computer program, when is executed by a computer, causes the computer to perform the corresponding processes performed by the first device in each of the methods in the embodiments of the present disclosure. For brevity, details are not elaborated herein again.

Optionally, the computer program may be applied to the third device in the embodiments of the present disclosure, and the computer program, when is executed by a computer, causes the computer to perform the corresponding processes performed by the third device in each of the methods in the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical schemes. Professionals may implement the described functions for each specific application by using different methods, but such implementations shall not be regarded as outside the scope of the present disclosure.

It may be clearly understood by those skilled in the art that, for the specific working processes of the systems, apparatuses and units described above, reference may be made to the corresponding processes in the aforementioned method embodiments, and such specific working processes of the systems, devices and units are not described herein again for the purpose of convenient and brief description.

In some embodiments provided in the present disclosure, it should be understood that the disclosed systems, apparatuses and methods may be implemented in other manners. For example, the apparatus embodiments described above are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the schemes of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical schemes of the present disclosure or a part of the technical schemes that contributes to the related art or a part of the technical schemes can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for channel access, comprising:
transmitting, by a first device, a first frame, wherein the first frame comprises a first field, the first field is used to indicate a channel occupation time of a first channel; the first field is used for a second device to set or update a network allocation vector (NAV), the NAV is used for the second device to determine a busy time of the first channel; all or part of the channel occupation time is used for a first-type device or a third device to communicate on the first channel, and the third device belongs to the first-type device.

2. The method of claim 1, wherein the first frame is a physical layer protocol data unit (PPDU) frame, the PPDU frame comprises a PPDU header, and the PPDU header comprises the first field.

3. The method of claim 2, wherein the PPDU header comprises a short training field, a long training field and a signal field, and the signal field comprises the first field.

4. The method of claim 1, wherein the first frame is a physical layer protocol data unit (PPDU) frame, the PPDU frame comprises a PPDU header and a media access control (MAC) frame, and the MAC frame comprises the first field.

5. The method of claim 4, wherein the MAC frame comprises a MAC header, and the MAC header comprises the first field.

6. The method of claim 4 or 5, wherein a frame type of the MAC frame comprises at least one of the following: a data frame, a control frame, or a management frame.

7. The method of any one of claims 1 to 6, wherein,
a length of the channel occupation time is determined based on a length of a first time and a length of a second time; or
a length of the channel occupation time is determined based on a length of a second time;
the first time is a channel reservation time for the first device, and the second time is a channel reservation time for the first-type device or the third device.

8. The method of claim 7, wherein a position of the second time is determined based on a position of a target wake time of the first-type device or the third device and/or a position of a restricted access time of the first-type device or the third device.

9. The method of any one of claims 1 to 8, wherein before transmitting, by the first device, the first frame, the method further comprises:
determining, by the first device, a channel access parameter related to the first-type device or the third device, and performing, by the first device, the channel access on the first channel based on the channel access parameter.

10. The method of claim 9, wherein the channel access parameter is determined based on at least one of following of the first-type device or the third device: a device type, a device group, a type of transmitted data, a type of a transmitted PPDU frame, a channel access time, a target wake time, or a restricted access time.

11. The method of claim 10, wherein the channel access time is determined based on the target wake time and/or the restricted access time.

12. The method of any one of claims 9 to 11, wherein the channel access parameter comprises at least one of the following:
a first parameter, used to indicate a size of a contention window; or
a second parameter, used to indicate a size or type of an interframe space corresponding to a waiting time.

13. The method of any one of claims 1 to 12, further comprising:
transmitting, by the first device, a first signal, wherein the first signal is used to determine a channel reservation time for the first-type device or the third device.

14. The method of claim 13, wherein transmitting, by the first device, the first signal comprises:
transmitting, by the first device, the first signal based on a first physical layer air interface technology, wherein the first physical layer air interface technology is a physical layer air interface technology supported by the third device.

15. The method of claim 13 or 14, wherein the first signal comprises at least one of the following:
a first information, used to indicate the channel occupation time;
a second information, used to indicate a device or a group of devices that are able to use the channel occupation time;
a third information, used to indicate a channel reservation time for the first-type device or the third device within the channel occupation time; or
a fourth information, used to indicate that the channel occupation time is obtained by the first device.

16. The method of any one of claims 13 to 15, wherein the first signal comprises a preamble portion and a load portion, the preamble portion is used to identify and/or synchronize the first signal, and the load portion is used to carry information in the first signal.

17. The method of any one of claims 13 to 16, wherein,
the first signal is transmitted after the first frame; or
the first signal is transmitted before the first frame.

18. The method of any one of claims 1 to 17, further comprising:
transmitting, by the first device, a second signal, wherein the second signal comprises at least one of the following:
a fifth information, used to indicate that one channel usage time is allocated to the third device;
a sixth information, the sixth information being allocation information of a channel usage time of the third device;
a seventh information, used to respond to transmission by the third device;
an eighth information, used to indicate that the first device has cache data that is required to be transmitted to the third device;
a ninth information, used for the third device to perform time synchronization; or
data transmitted from the first device to the third device.

19. The method of claim 18, wherein transmitting, by the first device, the second signal comprises:
transmitting, by the first device, the second signal based on a first physical layer air interface technology, wherein the first physical layer air interface technology is a physical layer air interface technology supported by the third device.

20. The method of any one of claims 1 to 19, further comprising:
receiving, by the first device, a third signal from the third device, wherein the third signal comprises at least one of the following:
a tenth information, used to respond to transmission by the first device;
an eleventh information, used to request the first device to allocate one channel usage time to the third device;
a twelfth information, used to request the first device to transmit cache data to the third device; or
data transmitted from the third device to the first device.

21. The method of claim 20, wherein receiving, by the first device, the third signal from the third device comprises:
receiving, by the first device, the third signal from the third device based on a first physical layer air interface technology, wherein the first physical layer air interface technology is a physical layer air interface technology supported by the third device.

22. The method of any one of claims 14, 19 and 21, wherein the first physical layer air interface technology is different from a second physical layer air interface technology, and the second physical layer air interface technology is a physical layer air interface technology supported by the second device.

23. A method for channel access, comprising:
determining, by a first device, a channel access parameter related to a first-type device or a third device, and performing, by the first device, the channel access on a first channel based on the channel access parameter, to obtain a channel occupation time of the first channel; wherein all or part of the channel occupation time is used for the first-type device or the third device to communicate on the first channel, and the third device belongs to the first-type device.

24. The method of claim 23, wherein the channel access parameter is determined based on at least one of following of the first-type device or the third device: a device type, a device group, a type of transmitted data, a type of a transmitted physical layer protocol data unit (PPDU) frame, a channel access time, a target wake time, or a restricted access time.

25. The method of claim 24, wherein the channel access time is determined based on the target wake time and/or the restricted access time.

26. The method of any one of claims 23 to 25, wherein the channel access parameter comprises at least one of the following:
a first parameter, used to indicate a size of a contention window; or
a second parameter, used to indicate a size or type of an interframe space corresponding to a waiting time.

27. A method for channel access, comprising:
transmitting, by a first device, a first signal, wherein the first signal is used to determine a channel reservation time for a first-type device or a third device; the channel reservation time is used for the first-type device or the third device to communicate on a first channel, and the third device belongs to the first-type device.

28. The method of claim 27, wherein transmitting, by the first device, the first signal comprises:
transmitting, by the first device, the first signal based on a first physical layer air interface technology, wherein the first physical layer air interface technology is a physical layer air interface technology supported by the third device.

29. The method of claim 27 or 28, wherein the first signal comprises at least one of the following:
a first information, used to indicate a channel occupation time;
a second information, used to indicate a device or a group of devices that are able to use a channel occupation time;
a third information, used to indicate a channel reservation time for the first type device or the third device within a channel occupation time; or
a fourth information, used to indicate that a channel occupation time is obtained by the first device.

30. The method of any one of claims 27 to 29, wherein the first signal comprises a preamble portion and a load portion, the preamble portion is used to identify and/or synchronize the first signal, and the load portion is used to carry information in the first signal.

31. The method of any one of claims 27 to 30, further comprising:
transmitting, by the first device, a second signal, wherein the second signal comprises at least one of the following:
a fifth information, used to indicate that one channel usage time is allocated to the third device;
a sixth information, the sixth information being allocation information of a channel usage time of the third device;
a seventh information, used to respond to transmission by the third device;
an eighth information, used to indicate that the first device has cache data that is required to be transmitted to the third device;
a ninth information, used for the third device to perform time synchronization; or
data transmitted from the first device to the third device.

32. The method of claim 31, wherein transmitting, by the first device, the second signal comprises:
transmitting, by the first device, the second signal based on a first physical layer air interface technology, wherein the first physical layer air interface technology is a physical layer air interface technology supported by the third device.

33. The method of any one of claims 27 to 32, further comprising:
receiving, by the first device, a third signal from the third device, wherein the third signal comprises at least one of the following:
a tenth information, used to respond to transmission by the first device;
an eleventh information, used to request the first device to allocate one channel usage time to the third device;
a twelfth information, used to request the first device to transmit cache data to the third device; or
data transmitted from the third device to the first device.

34. The method of claim 33, wherein receiving, by the first device, the third signal from the third device comprises:
receiving, by the first device, the third signal from the third device based on a first physical layer air interface technology, wherein the first physical layer air interface technology is a physical layer air interface technology supported by the third device.

35. The method of any one of claims 28, 32 and 34, wherein the first physical layer air interface technology is different from a second physical layer air interface technology, and the second physical layer air interface technology is a physical layer air interface technology supported by a second device.

36. A method for channel access, comprising:
receiving, by a third device, a first signal from a first device, wherein the first signal is used to determine a channel reservation time for a first-type device or the third device; the channel reservation time is used for the first-type device or the third device to communicate on a first channel, and the third device belongs to the first-type device.

37. The method of claim 36, wherein receiving, by the third device, the first signal from the first device comprises:
receiving, by the third device, the first signal from the first device based on a first physical layer air interface technology, wherein the first physical layer air interface technology is a physical layer air interface technology supported by the third device.

38. The method of claim 36 or 37, wherein the first signal comprises at least one of the following:
a first information, used to indicate a channel occupation time;
a second information, used to indicate a device or a group of devices that are able to use a channel occupation time;
a third information, used to indicate a channel reservation time for the first type device or the third device within a channel occupation time; or
a fourth information, used to indicate that a channel occupation time is obtained by the first device.

39. The method of any one of claims 36 to 38, wherein the first signal comprises a preamble portion and a load portion, the preamble portion is used to identify and/or synchronize the first signal, and the load portion is used to carry information in the first signal.

40. The method of any one of claims 36 to 39, further comprising:
receiving, by the third device, a second signal from the first device, wherein the second signal comprises at least one of the following:
a fifth information, used to indicate that one channel usage time is allocated to the third device;
a sixth information, the sixth information being allocation information of a channel usage time of the third device;
a seventh information, used to respond to transmission by the third device;
an eighth information, used to indicate that the first device has cache data that is required to be transmitted to the third device;
a ninth information, used for the third device to perform time synchronization; or
data transmitted from the first device to the third device.

41. The method of claim 40, wherein receiving, by the third device, the second signal from the first device comprises:
receiving, by the third device, the second signal from the first device based on a first physical layer air interface technology, wherein the first physical layer air interface technology is a physical layer air interface technology supported by the third device.

42. The method of any one of claims 36 to 41, further comprising:
transmitting, by the third device, a third signal, wherein the third signal comprises at least one of the following:
a tenth information, used to respond to transmission by the first device;
an eleventh information, used to request the first device to allocate one channel usage time to the third device;
a twelfth information, used to request the first device to transmit cache data to the third device; or
data transmitted from the third device to the first device.

43. The method of claim 42, wherein transmitting, by the third device, the third signal comprises:
transmitting, by the third device, the third signal based on a first physical layer air interface technology, wherein the first physical layer air interface technology is a physical layer air interface technology supported by the third device.

44. The method of any one of claims 37, 41 and 43, wherein the first physical layer air interface technology is different from a second physical layer air interface technology, and the second physical layer air interface technology is a physical layer air interface technology supported by a second device.

45. The method of any one of claims 36 to 44, further comprising:
if the channel reservation time is dedicated to the third device, determining, by the third device, the channel reservation time as a channel usage time of the third device; or
if the channel reservation time is common to the first-type device, determining, by the third device within the channel reservation time, a channel usage time of the third device.

46. The method of claim 45, wherein determining, by the third device within the channel reservation time, the channel usage time of the third device, comprises:
determining, by the third device within the channel reservation time, the channel usage time of the third device based on an energy detection result of the first channel.

47. The method of claim 45, wherein determining, by the third device within the channel reservation time, the channel usage time of the third device, comprises:
determining, by the third device within the channel reservation time, the channel usage time of the third device based on a first rule, wherein the first rule is used to divide the channel reservation time into a plurality of channel usage times, and different channel usage times belong to different devices.

48. An apparatus for channel access, applied to a first device, the apparatus comprising:
a transmission unit, configured to transmit a first frame, wherein the first frame comprises a first field, the first field is used to indicate a channel occupation time of a first channel; the first field is used for a second device to set or update a network allocation vector (NAV), the NAV is used for the second device to determine a busy time of the first channel; all or part of the channel occupation time is used for a first-type device or a third device to communicate on the first channel, and the third device belongs to the first-type device.

49. An apparatus for channel access, applied to a first device, the apparatus comprising:
a determination unit, configured to determine a channel access parameter related to a first-type device or a third device, wherein the third device belongs to the first-type device; and
an access unit, configured to perform the channel access on a first channel based on the channel access parameter, to obtain a channel occupation time of the first channel; wherein all or part of the channel occupation time is used for the first-type device or the third device to communicate on the first channel, and the third device belongs to the first-type device.

50. An apparatus for channel access, applied to a first device, the apparatus comprising:
a transmission unit, configured to transmit a first signal, wherein the first signal is used to determine a channel reservation time for a first-type device or a third device; the channel reservation time is used for the first-type device or the third device to communicate on a first channel, and the third device belongs to the first-type device.

51. An apparatus for channel access, applied to a third device, the apparatus comprising:
a receiving unit, configured to receive a first signal from a first device, wherein the first signal is used to determine a channel reservation time for a first-type device or a third device; the channel reservation time is used for the first-type device or the third device to communicate on the first channel, and the third device belongs to the first-type device.

52. A communication device, comprising a processor and a memory for storing a computer program, wherein the processor is configured for invoking and executing the computer program stored in the memory to perform the method of any one of claims 1 to 35 or the method of any one of claims 36 to 47.

53. A chip, comprising a processor for invoking and executing a computer program from a memory to enable a device on which the chip is mounted to perform the method of any one of claims 1 to 35 or the method of any one of claims 36 to 47.

54. A computer-readable storage medium for storing a computer program that causes a computer to perform the method of any one of claims 1 to 35 or the method of any one of claims 36 to 47.

55. A computer program product comprising a computer program instruction that causes a computer to perform the method of any one of claims 1 to 35 or the method of any one of claims 36 to 47.

56. A computer program that causes a computer to perform the method of any one of claims 1 to 35, or the method of any one of claims 36 to 47.
